# EUROPEAN PATENT SPECIFICATION

(11) **EP 3 378 606 B1**
(45) Date of publication and mention of the grant of the patent: **02.08.2023**
(21) Application number: 16866379.7
(22) Date of filing: 17.11.2016
(51) Int. Cl.: B25J 11/00, B66F 19/00, B25J 9/00, B25J 9/10

(54) **ASSISTANCE SUIT**
HILFSGARNITUR
COMBINAISON D'ASSISTANCE

(30) Priority: 20.11.2015 JP 2015227688; 20.11.2015 JP 2015227689; 20.11.2015 JP 2015227690; 20.11.2015 JP 2015227691; 20.11.2015 JP 2015227692; 20.11.2015 JP 2015227693
(43) Date of publication of application: 26.09.2018
(73) Proprietor: Kubota Corporation, Osaka-shi, Osaka 556-8601 (JP)
(72) Inventor: SAKANO, Tomoyoshi, Sakai-shi Osaka 590-0823 (JP); MITSUI, Kenji, Sakai-shi Osaka 590-0823 (JP); INOUE, Yuta, Sakai-shi Osaka 590-0823 (JP); KOTANI, Shinsuke, Sakai-shi Osaka 590-0823 (JP); NAKATSUKA, Masaki, Sakai-shi Osaka 590-0823 (JP); HAYASHI, Masahiko, Sakai-shi Osaka 590-0823 (JP); NISHIDA, Keisuke, Sakai-shi Osaka 590-0823 (JP); MATSUMORI, Takahito, Sakai-shi Osaka 590-0823 (JP)
(74) Representative: Cabinet Beau de Loménie
(86) International application number: PCT/JP2016/084072
(87) International publication number: WO 2017/086378

(56) References cited:
- WO-A1-2011/127421
- WO-A1-2011/129013
- WO-A1-2015/132850
- JP-A- 2002 012 400
- JP-A- 2004 136 388
- JP-A- 2010 063 581
- JP-A- 2011 156 344
- JP-A- 2012 219 869
- JP-A- 2013 138 848
- JP-A- 2014 148 854
- JP-A- 2015 002 970
- JP-A- 2015 182 833
- US-A1- 2011 266 323

## Description

### TECHNICAL FIELD

The present invention relates to an assistance suit.

### BACKGROUND ART

### Background Art 1

A conventional assistance suit is disclosed in Patent Document 1 noted below, for example. This assistance suit assists a worker who lifts and carries objects, or carries a care-dependent person. This assistance suit includes an exoskeleton torso (160 in Fig. 1 of Patent Document 1), a load lifting mechanism (221 in Fig. 1 of Patent Document 1) that extends forward from the exoskeleton torso to a position beyond the worker, a driving device that drives the load lifting mechanism, etc.

In this assistance suit, the load lifting mechanism is provided with arm portions that extend forward from the exoskeleton torso to a position beyond the worker, wires (222 in Fig. 1 of Patent Document 1) that extend downward from the arm portions, and end effectors (223 in Fig. 1 of Patent Document 1) that are coupled to the wires and hold a load when held by the worker's hands.

In the technology disclosed in Patent Document 1, the worker puts on the assistance suit by attaching the exoskeleton torso to their back portion (carrying it on their back), and the worker holds the end effectors of the load lifting mechanism with their hands.

Accordingly, while wearing the assistance suit, the worker holds the load with the load lifting mechanism, and the load is supported by the load lifting mechanism in this state. The worker stabilizes the position of the load (prevents the load from swinging) by holding the end effectors of the load lifting mechanism in their hands.

The end effectors of the load lifting mechanism (the load) can be raised by winding the wires with the driving device provided in the main body portion, and the end effectors of the load lifting mechanism (the load) can be lowered by unwinding the wires with the driving device.

### Background Art 2

A conventional assistance suit is disclosed in Patent Document 1 noted below, for example. This assistance suit includes a main body portion that is provided with a waist belt and shoulder belts and can be worn by being carried on the user's back portion, lifting arms that extend forward and upward from the main body portion to a position beyond the user's shoulder portions when worn, lifting cord elements that extend from the leading ends of the lifting arms, grip operation tools that are engageable with a load that is to be lifted, and a winding winch that winds the cord elements on the main body portion side. In this type of assistance suit, one lifting arm that extends from the main body portion and one grip operation tool that is engageable with the load that is to be lifted are coupled via a single cord element.

### Background Art 3

A conventional assistance suit is disclosed in Patent Document 1 noted below, for example. This assistance suit includes a main body portion that is provided with a belt attachment tool and can be worn while being carried on the user's back portion, lifting arms that extend forward and upward from the main body portion to a position beyond the user's shoulder portions when worn, lifting cord elements that extend from the leading ends of the lifting arms, grip operation tools that are attached to the extending end portions of the cord elements and are engageable with the load that is to be lifted, and a winding winch that winds the cord elements on the main body portion side. In this type of assistance suit, the lifting arms that extend from the main body portion and the grip operation tools that are engageable with the load that is to be lifted are coupled via cord elements.

### Background Art 4

A conventional assistance suit is disclosed in Patent Document 2 noted below, for example. This assistance suit includes an attachment portion ("back frame" in this document) for attachment to the worker's waist portion, swingable arm portions ("lower extremity assist arms" in this document) that are attached to the attachment portion so as to be swingable about a swinging axis along the right-left direction, and a driving device ("power assist electrical motor" in this document) capable of driving the swingable arm portions to swing. The right and left swingable arm portions are each provided with a support portion that transmits assistive power to thigh portions of the worker.

### Background Art 5

A conventional assistance suit is disclosed in Patent Document 2 noted below, for example. This assistance suit includes a main frame ("rear frame" in this document) that is located on the worker's back portion side, and waist frames ("waist frames" in this document) that are attached to the right and left sides of the main frame, and also includes an attachment portion for attachment to the worker's waist portion, swingable arm portions ("lower extremity assist arms" in this document) that are attached to the right and left waist frames so as to be capable of swinging about a swinging axis along the right-left direction and that can transmit assistive power to the worker's thigh portions, and a driving device ("power assist electrical motor" in this document) that can drive the right and left swingable arm portions to swing.

### Background Art 6

A conventional assistance suit is disclosed in Patent Document 2 noted below, for example. This assistance suit includes a main frame ("rear frame" in this document) that is located on the worker's back portion side, and a waist frame ("waist frame" in this document) that is attached to one side of the main frame, and also includes an attachment portion for attachment to the worker's waist portion, and swingable arm portions ("lower extremity assist arms" in this document) that are attached to the front portion side of the waist frame so as to be capable of swinging about a swinging axis along the right-left direction and that can transmit assistive power to the worker's thigh portions. This assistance suit also includes a driving device ("power assist electrical motor" in this document) that is provided on the waist frame and can drive the swingable arm portions to swing.

### PRIOR ART DOCUMENTS

### Patent Documents

Patent Document 1: JP 2013-531593A
Patent Document 2: JP 2015-077354A
JP2015182833A discloses another example of assistance suit.

### SUMMARY OF THE INVENTION

### Problem to be Solved by the Invention

### Problem 1 (corresponding to Background Art 1 above)

As previously mentioned, in order to wind and unwind the wires, the driving device is provided with rotating bodies for winding and unwinding the wires and an electrical motor for driving the rotating bodies to rotate in a winding direction and an unwinding direction.

In light of this situation, in the case where the driving device of the assistance suit includes the rotating bodies and the electrical motor for winding and unwinding the wires, there has been desire to provide an assistance suit in which the rotating bodies and the electrical motor are grouped together in a compact manner.

### Problem 2 (corresponding to Background Art 2 above)

According to the conventional assistance suit described above, it is not possible to deny the possibility of breakage of the cord elements caused by degradation etc. of the cord elements when used for an extended period of time.

In light of this situation, there has been desire to provide an assistance suit that can reduce the possibility that all of the cord elements will break at the same time even if the cord elements degrade when used for an extended period of time.

### Problem 3 (corresponding to Background Art 3 above)

According to the conventional assistance suit described above, the lifting arms and the grip operation tools are simply connected by cord elements. For this reason, there is a possibility that the grip operation tools will come abnormally close to the lifting arms if the winding winch control device malfunctions or fails for some sort of reason, for example.

In light of this situation, there has been desire to provide an assistance suit that can reduce the possibility of the grip operation tools coming abnormally close to the lifting arms even if the winding winch control device malfunctions.

### Problem 4 (corresponding to Background Art 4 above)

In the conventional technology described above, the bearing portions are rotatably supported by the swingable arm portions by bearing rotation shafts, and therefore when the swingable arm portions are driven, there has been the risk that assistive power will not be readily transmitted to the worker's thigh portions due to swinging or twisting of the support portions.

In light of this situation, there has been desire to provide an assistance suit in which assistive power can be efficiently transmitted from the swingable arm portions to the worker's thigh portions.

### Problem 5 (corresponding to Background Art 5 above)

In the conventional technology described above, the positions of the right and left waist frames with the swingable arm portions attached thereto are adjusted relative to the main frame by selecting appropriate adjustment holes, and therefore the task of adjusting the positions of the right and left waist frames has been time-consuming.

In light of this situation, there has been desire to provide an assistance suit in which the positions of the right and left waist frames can be easily adjusted to fit the worker's physique.

### Problem 6 (corresponding to Background Art 6 above)

Some driving devices include a gear mechanism and a drive motor. In such a case, if the drive motor is arranged such that the drive axis of the drive motor extends in the front-rear direction for example, there has been the risk that the drive motor will protrude rearward from the waist frame and become a hindrance.

In light of this situation, there has been desire to provide an assistance suit in which the drive system including the drive motor for driving the swingable arm portions has a reasonable structure.

### Means for Solving Problem

### Solution 1 (corresponding to Problem 1 above)

An assistance suit of the present invention includes: a main body portion configured to be attached to a back portion of a worker, and an arm portion that extends forward from the main body portion to a position beyond the worker;
a wire that extends downward from the arm portion, and a hand portion that is coupled to the wire and is configured to hold a load by being held by a hand of the worker;
a driving device configured to raise the hand portion by winding the wire and lower the hand portion by unwinding the wire; and
a manual operation portion that, by being operated by the worker, causes the driving device to operate,
wherein the driving device is provided in the main body portion,
the driving device comprises a rotating body that is arranged extending in a right-left direction so as to be capable of rotating about a rotation axis that extends in the right-left direction and is configured to wind and unwind the wire, an electrical motor that is arranged extending in the right-left direction below the rotating body, and a transmission mechanism that is arranged extending in an up-down direction and spans between an end portion of the electrical motor on an output shaft side and a right or left end portion of the rotating body that is on the output shaft side, and
motive power from the electrical motor is transmitted to the rotating body via the transmission mechanism, and the rotating body is thus driven to rotate in a winding direction and an unwinding direction.

According to this invention, the driving device includes the rotating body that is arranged extending in the right-left direction, the electrical motor arranged extending in the right-left direction below the rotating body, and the transmission mechanism that is arranged extending in the up-down direction and spans between the end portion on the output shaft side of the electrical motor and the right or left end portion of the rotating body that is on the output shaft side; and the rotating body, the electrical motor, and the transmission mechanism are arranged compactly in the shape of a sharp-cornered C (or a sharp-cornered reversed C) for example in a rear view (front view).

In this case, the arm portion is located on the upper side, and the driving device is located on the lower side, and therefore by arranging the rotating body so as to extend in the right-left direction, the wire smoothly extends upward from the rotating body and reaches the arm portion, and the wire smoothly extends downward from the arm portion.

The electrical motor is located below the rotating body and the transmission mechanism is located on one lateral side of the rotating body, and therefore the wire smoothly extends upward from the rotating body without interference with the electrical motor or the transmission mechanism.

In the above configuration, it is preferable that the transmission mechanism includes a first bearing portion that supports the right or left end portion of the rotating body on the output shaft side, the transmission mechanism being coupled to the main body portion,
a second bearing portion is provided, the second bearing portion supporting a right or left end portion of the rotating body on a side opposite to the output shaft side, the second bearing portion being coupled to the main body portion, and
the rotating body is supported by the first bearing portion and the second bearing portion so as to be capable of rotating about the rotation axis.

In the case where the rotating body is supported so as to be capable of rotating about the rotation axis that extends in the right-left direction, the right and left-side end portions of the rotating body can be supported by bearing portions.

In this case, according to this configuration, a second bearing portion supports the right or left end portion of the rotating body that is on the side opposite to the output shaft of the electrical motor, the second bearing portion is coupled to the main body portion, and the second bearing portion is supported to the main body portion.

In view of this, a first bearing portion supports the right or left end portion of the rotating body on the same side as the output shaft of the electrical motor, the first bearing portion is provided in the transmission mechanism, the transmission mechanism is coupled to the main body portion, and the first bearing portion is supported to the main body portion via the transmission mechanism.

Accordingly, the transmission mechanism that transmits motive power from the electrical motor to the rotating body also serves as a support member for the first bearing portion, thus making it possible to simplify the structure.

In the above configuration, it is preferable that due to the electrical motor being coupled to the transmission mechanism, the electrical motor is coupled to the main body portion via the transmission mechanism.

According to this configuration, in the state where the transmission mechanism is coupled to the main body portion, due to the electrical motor being coupled to the transmission mechanism, the electrical motor is coupled to the main body portion via the transmission mechanism.

Accordingly, the transmission mechanism that transmits motive power from the electrical motor to the rotating body also serves as a support member for the electrical motor, thus making it possible to simplify the structure.

In the above configuration, it is preferable to further include a cover that covers the rotating body.

According to this configuration, the cover that covers the rotating body is provided, thus making it possible to prevent dirt or the like from adhering to the rotating body, and making it possible to reduce the number of wire winding problems (unwinding problems) that occur due to the adhering of dirt or the like to the rotating body.

In the above configuration, it is preferable that the cover includes a fixing portion and a detachable portion that is attachable and detachable, and
an opening portion is provided in the fixing portion, and the wire is wound to and unwound from the rotating body through the opening portion.

According to this configuration, in the case where the cover that covers the rotating body is provided, the cover is provided with a fixing portion and a detachable portion.

Accordingly, by removing the detachable portion of the cover, it is possible to easily perform cleaning of the rotating body and maintenance of the rotating body, and favorable workability is achieved.

Furthermore, due to the opening portion being provided in the fixing portion of the cover, the wire is wound and unwound by the rotating body through the opening portion in the fixing portion of the cover, and therefore the cover is not influenced by the wire when removing the detachable portion of the cover as described above.

In the above configuration, it is preferable that the rotating body and the transmission mechanism are coupled via a coupling member that enables coupling and uncoupling, and
when the detachable portion is removed, the rotating body can be removed from the transmission mechanism.

According to this configuration, the rotating body can be easily removed by removing the detachable portion of the cover and then uncoupling the rotating body and the transmission mechanism, and therefore maintenance operations such as rotating body replacement can be performed easily, and favorable workability is achieved.

Solution 2 (corresponding to Problem 2 above and not part of the present invention)

An assistance suit according to solution 2 includes: a main body portion that includes a belt attachment tool and is capable of being worn in a state of being carried on a back portion of a user;
a lifting arm that extends forward and upward from the main body portion to a position beyond a shoulder portion of the user in a worn state;
a lifting cord element that extends from a leading end portion of the lifting arm;
a grip operation tool that is attached to an extending-side end portion of the cord element and is capable of being engaged to and disengaged from a load to be lifted; and
a winding winch configured to wind the cord element on a main body portion side,
wherein a plurality of the cord elements are connected to one grip operation tool and extend between the grip operation tool and the lifting arm, and each of the cord elements has a strength capable of individually withstanding a load that is set in advance as an allowable lifting load.

According to this assistance suit, the cord element that extends between the lifting arm and the grip operation tool includes a plurality of cord elements that are connected to the one grip operation tool. Also, the cord elements each have a strength for individually withstanding the weight set in advance as the allowable lifting load.

Accordingly, there is a very low possibility of all of the cord elements breaking at the exact same time, and there is an advantage in that even if one cord element breaks, there is a high possibility that the suspended state of the lifting target load will be maintained by the other remaining cord element.

In the above configuration, it is preferable that a load sharing percentage, with respect to a weight of the load to be lifted, of one of the cord elements is different from that of another one of the cord elements.

According to this configuration, the load sharing percentage, with respect to the weight of the lifting target load, of one of the cord elements is different from that of another one of the cord elements, and therefore the cord element having the smaller sharing percentage will, without fail, degrade less readily than the cord element having the larger sharing percentage. As a result, even if the cord element having the larger sharing percentage breaks during use over an extended time, the weight of the lifting target load can be reliably supported by the cord element having the smaller sharing percentage and having a lower extent of degradation.

In the above configuration, it is preferable that a length of one of the cord elements is different from a length of another one of the cord elements.

According to this configuration, the load sharing percentages of the cord elements can be changed with a simple structure of merely changing the lengths of the cord elements.

In the above configuration, it is preferable that a fixing position, with respect to the grip operation tool, of one of the cord elements and a fixing position, with respect to the grip operation tool, of another one of the cord elements are set to different positions in a direction of movement toward and away from the lifting arm.

According to this configuration, the load sharing percentages of the cord elements can be changed with a simple structure of merely changing the positions fixed to the grip operation tool, without changing the lengths of the cord elements.

In the above configuration, it is preferable that the winding winch is provided with a reel device for winding the cord elements, and a coupling location of one of the cord elements to the reel device and a coupling location of another one of the cord elements to the reel device are positions having different phases in a winding direction of the reel device.

According to this configuration, with use of the reel device, the load sharing percentages of the cord elements can be changed with a simple structure through merely an innovation to the location of connection of the cord elements to the reel device.

In the above configuration, it is preferable that the cord elements each include an outer wire and an inner wire,
the lifting arm is provided with a wire stopper portion configured to be capable of fixing end portions of the outer wires,
an end portion of each of the outer wires is provided with a fixing tool configured to fix the outer wire in a state of sandwiching the wire stopper portion from two sides in a length direction of the cord elements,
the fixing tools each include a threaded portion that is provided integrated with the end portion of the outer wire, and a screwing member that is slidably fitted around the inner wire and can be screwed to the threaded portion, and
elongated holes that allow passage of the threaded portions are formed in the wire stopper portion, and the screwing members are capable of moving through the elongated holes in the length direction of the cord elements.

According to this configuration, the screwing member can be passed through the elongated hole of the wire stopper portion while attached, thus obtaining an advantage in that the screwing member does not need to be detached from and attached to the inner wire every time.

In the above configuration, it is preferable that a height of a projecting end portion of the lifting arm that extends forward and upward from the main body portion is set in region that is approximately the same as or lower than a height corresponding to a top portion of a head portion of the user in the worn state.

This configuration achieves an advantage of being able to reduce the risk of the lifting arm unexpectedly becoming caught on another object when, for example, performing work at a site having relatively low objects, such as an orchard.

Solution 3 (corresponding to Problem 3 above and not part of the present invention)

An assistance suit according to solution 3 includes: a main body portion that includes a belt attachment tool and is capable of being worn in a state of being carried on a back portion of a user;
a lifting arm that extends forward and upward from the main body portion to a position beyond a shoulder portion of the user in a worn state;
a lifting cord element that extends from a leading end portion of the lifting arm;
a grip operation tool that is attached to an extending-side end portion of the cord element and is capable of being engaged to and disengaged from a load to be lifted; and
a winding winch configured to wind the cord element on a main body portion side,
wherein a stopper is provided between the lifting arm and the grip operation tool, the stopper maintaining a closest distance between the lifting arm and the grip operation tool in a predetermined range.

According to this assistance suit, the stopper is provided between the lifting arm and the grip operation tool, and the stopper maintains the closest distance between the lifting arm and the grip operation tool in the predetermined range. For this reason, even if a malfunction occurs in the control system, and the winding winch fails to stop and the grip operation tool is wound, it is possible to mechanically prevent the grip operation tool from moving abnormally close to the lifting arm beyond the predetermined range, thus readily avoiding damage to the grip operation tool for example.

In the above configuration, it is preferable that the stopper is fixed to the cord element and suppresses winding of the cord element by abutting against the lifting arm.

According to this configuration, the cord elements are prevented from being wound more than necessary with a simple structure using the chord-like bodies as the stopper attachment means.

In the above configuration, it is preferable that the stopper is fixed to the grip operation tool and suppresses winding of the cord element by abutting against the lifting arm.

According to this configuration, the cord elements are prevented from being wound more than necessary with a simple structure using the grip operation tool as the stopper attachment means.

In the above configuration, it is preferable that the stopper is configured by a tubular member that is fitted around the cord element between the lifting arm and the grip operation tool, and suppresses winding of the cord element by abutting against the lifting arm and the grip operation tool.

According to this configuration, the cord elements are prevented from being wound more than necessary with use of a simple structure in which the tubular member fitted around the cord elements is merely provided between the lifting arm and the grip operation tool.

In the above configuration, it is preferable that a plurality of the cord elements are connected to one grip operation tool and extend between the grip operation tool and the lifting arm, and each of the cord elements has a strength capable of individually withstanding a load that is set in advance as an allowable lifting load, and
the stopper is fixed to the plurality of cord elements connected to the one grip operation tool.

According to this configuration, there is a very low possibility of all of the cord elements breaking at the exact same time, and even if one cord element breaks, there is a high possibility that the suspended state of the lifting target load will be maintained by the other remaining cord element.

In this structure using multiple cord elements as well, the stopper is fixed to multiple cord elements, and therefore the cord elements are prevented from being wound more than necessary with a simple structure.

Solution 4 (corresponding to Problem 4 above and not part of the present invention)

An assistance suit according to solution 4 includes: an attachment portion configured to be attached to a waist portion of a worker;
swingable arm portions that are attached to the attachment portion so as to be capable of swinging about a swing axis that extends along a right-left direction;
a driving device configured to drive the swingable arm portions to swing; and
leg belts that are respectively attached to the swingable arm portions and are wide and configured to be attached by being wrapped entirely around respective thigh portions of the worker,
wherein the leg belts are each connected to the respective swingable arm portions at at least two locations including a location on one end portion side in a width direction of the leg belt and a location on an other end portion side in the width direction of the leg belt, the other end portion side being a side opposite to the one end portion side in the width direction of the leg belt.

According to this assistance suit, the leg belts that receive assistive power from the swingable arm portions are wide and are worn by being wrapped entirely around the thigh portions of the worker, and therefore the thigh portions of the worker are tightly bound by the leg belt, and the leg belts will not become separated from the thigh portions of the worker.

Furthermore, the leg belts are each fixed to the corresponding swingable arm portion at at least two locations, namely the location on one end portion side in the width direction of the leg belt and the location on the other end portion side in the width direction of the leg belt, and therefore a problem such as twisting of the leg belts is not likely to occur, and assistive power from the swingable arm portions is efficiently transmitted by the leg belts to the thigh portions of the worker.

Therefore, according to this assistance suit, assistive power can be efficiently transmitted from the swingable arm portions to the thigh portions of the worker.

In the above configuration, it is preferable that the leg belts are each respectively fixed to the swingable arm portions at a location between the location on the one end portion side in the width direction of the leg belt and the location on the other end portion side in the width direction of the leg belt.

According to this configuration, the leg belts are each fixed to the corresponding swingable arm portion also at a location that is located between the location on one end portion side in the width direction of the leg belt and the location on the other end portion side in the width direction of the leg belt, and therefore a problem such as twisting of the leg belts is not likely to occur, and assistive power from the swingable arm portions is efficiently transmitted to the thigh portions of the worker via the leg belts.

In the above configuration, it is preferable that the locations where the leg belts are each respectively fixed to the swingable arm portions are arranged side-by-side along the width direction of the leg belts.

According to this configuration, the locations where the leg belts are fixed to the swingable arm portions are arranged side-by-side along the width direction of the leg belts, and therefore the leg belts are firmly fixed to the swingable arm portions in the width direction of the leg belts, twisting of the leg belts is not likely to occur, and assistive power from the swingable arm portions is efficiently transmitted to the thigh portions of the worker via the leg belts.

In the above configuration, it is preferable that the leg belts are each provided with a coupling portion capable of coupling and uncoupling one end portion in a lengthwise direction of the leg belt and an other end portion in the lengthwise direction of the leg belt, and
the leg belts are attached to respective thigh portions of the worker by wrapping the leg belt around the thigh portion of the worker so as to pass a front side, an inner side, and a rear side of the thigh portion of the worker in this order, and then performing coupling with use of the coupling portion.

According to this configuration, the leg belts are worn in a state of passing between the right and left thigh portions from front to back, and therefore the operation of attaching the leg belts is easier than in the case where, for example, the leg belts are wrapped around the thigh portions of the worker by passing the rear side, the inner side, and the front side of the thigh portions of the worker in this order.

In the above configuration, it is preferable that the coupling portions are located at a location in a vicinity of the rear side of the respective thigh portions of the worker when the leg belts are being worn.

According to this configuration, the coupling portion is located in the vicinity of the rear side of the thigh portion of the worker, thus making it possible to avoid uncoupling of the coupling portion if the load held by the worker comes into contact with the leg belt from the front side, for example.

In the above configuration, it is preferable that the leg belts each have a conical shape in which a cross-sectional area surrounded by the leg belt decreases as the leg belt extends from a base of the thigh portion of the worker toward toes of the worker when the leg belt is being worn.

According to this configuration, the leg belts each have a conical shape in which the cross-sectional area surrounded by the leg belt decreases as the leg belt extends from the base of the thigh portion of the worker toward toes of the worker when the leg belt is being worn so as to conform to the shape of the thigh portion of the worker, and therefore the leg belt more readily fits to the thigh portion of the worker, and assistive power is favorably transmitted from the swingable arm portions to the thigh portions via the leg belts.

In the above configuration, it is preferable that the leg belts are each constituted by a resin member that has flexibility and elasticity.

According to this configuration, due to being constituted by resin members that have flexibility and elasticity, the leg belts are easily attached to the thigh portions, and assistive power is favorably transmitted from the leg belts to the thigh portion. Furthermore, manufacturing cost can be suppressed to a lower cost than in the case where the leg belts are constituted by a leather member or the like.

### Solution 5 (corresponding to Problem 5 above and not part of the present invention)

An assistance suit according to solution 5 includes: an attachment portion that is configured to be attached to a waist portion of a worker and that is provided with a main frame configured to be located on a back portion side of the worker and waist frames that are attached to right and left sides of the main frame respectively;
swingable arm portions that are respectively attached to the right and left waist frames so as to be capable of swinging about a swing axis that extends along a right-left direction, the swingable arm portions being capable of transmitting assistive power to respective thigh portions of the worker;
a driving device configured to drive the right and left swingable arm portions to swing;
a guide mechanism configured to guide sliding of the right and left waist frames relative to the main frame; and
waist belts that are respectively attached to the right and left waist frames and are capable of being worn by being wrapped around a waist of the worker while being adjusted in length.

According to this assistance suit, the right and left waist frames can slide relative to the main frame with use of the guide mechanism, and the lengths of the waist belts attached to the right and left waist frames can be adjusted when being wrapped around the waist. Accordingly, the right and left waist frames are pulled by the waist belts and slide relative to the main frame, and thus the positions of the swingable arm portions attached to the waist frames are adjusted to appropriate locations that fit the physique of the worker.

Therefore, according to this assistance suit, the positions of the right and left waist frames can be easily adjusted to fit the physique of the worker.

In the above configuration, it is preferable that the guide mechanism includes a right rack gear that is provided on the right waist frame so as to extend along the right-left direction, a left rack gear that is provided on the left waist frame so as to extend along the right-left direction and that is arranged facing the right rack gear, and a pinion gear that is located between the left rack gear and the right rack gear and is meshed with the left rack gear and the right rack gear, and
when one of the right and left waist frames slides in the right-left direction, the sliding is transmitted to another other one of the right and left waist frames via the pinion gear, and the other waist frame slides in a direction opposite to the one waist frame.

According to this configuration, the rack gears provided on the right and left waist frames are coupled and interlinked with the pinion gear. Accordingly, when the left waist frame is slid relative to the main frame, the right waist frame moves in the direction opposite to the left waist frame. In other words, the left waist frame and the right waist frame slide in a right-left symmetrical manner relative to the main frame. For this reason, the left waist frame and the right waist frame do not move in a right-left asymmetrical manner relative to the main frame, weight balance is not lost in the overall right-left direction, and the swingable arm portions attached to the right and left waist frames can appropriately apply assistive power to the thigh portions of the worker.

### Solution 6 (corresponding to Problem 6 above and not part of the present invention)

An assistance suit according to solution 6 includes: an attachment portion that is configured to be attached to a waist portion of a worker, and that is provided with a main frame configured to be located on a back portion side of the worker and a waist frame that is attached to one side of the main frame;
swingable arm portions that are respectively attached to a front portion side of the waist frame so as to be capable of swinging about a swing axis that extends along a right-left direction, the swingable arm portions being capable of transmitting assistive power to respective thigh portions of the worker; and
a driving device that is provided on the waist frame and is capable of driving the swingable arm portions to swing,
wherein the driving device is provided with a gear mechanism that is provided on the waist frame and is connected to the swingable arm portions, and a drive motor that is provided on a rear portion of the waist frame and applies drive power to the gear mechanism, and
the drive motor is arranged in a manner in which a drive axis of the drive motor extends along the right-left direction.

According to this assistance suit, assistive power is transmitted to the thigh portions of the worker by the swingable arm portions that are respectively attached to the right and left waist arms attached to the main frame that is located on the back portion side of the worker. The drive motor that applies drive power to the swingable arm portions is arranged such that the drive axis extends along the right-left direction, thus making it possible to suppress the case of being pulled rearward from the waist frame, and the drive motor is arranged to achieve compactness in the front-rear direction.

Therefore, according to this assistance suit, it is possible to provide an assistance suit in which the drive system including the drive motor for driving the swingable arm portions has a reasonable structure.

In the above configuration, it is preferable that a gear case that houses the gear mechanism is provided on the waist frame, and
the drive motor is arranged forward a rear end portion of the gear case.

According to this configuration, the drive motor that drives the swingable arm portions is arranged forward of the rear end portion of the gear case that houses the gear mechanism, thus making it possible to avoid the case where the drive motor is pulled rearward of the gear case.

In the above configuration, it is preferable that the gear mechanism is provided with a plurality of gears,
one of the plurality of gears that is located most downstream in a transmission direction is configured by a fan-shaped gear,
a stopper body capable of abutting against an end portion of the fan-shaped gear is provided, and
a swinging angle of the swingable arm portions is restricted by the stopper body.

According to this configuration, the stopper body is provided in the gear mechanism that reduces the speed of drive power from the drive motor and transmits it to the swingable arm portions, and this stopper body restricts the swing angles of the swingable arm portions to within a given range, thus making it possible to avoid the case where an excessive load is transmitted from the swingable arm portions to the worker, and making it possible for the stopper body to be provided compactly.

In the above configuration, it is preferable to further include a battery that is provided on a rear surface side of the main frame and supplies electrical power for driving the drive motor,
wherein the drive motor is arranged in a state of not projecting rearward from the battery.

According to this configuration, the drive motor that drives the swingable arm portions is arranged in a state of not projecting rearward from the battery that drives the drive motor, thus making it possible to arrange the drive motor compactly in the front-rear direction. Also, the drive motor is not likely to become a hindrance when removing the battery from behind for charging, for example.

### BRIEF DESCRIPTION OF THE DRAWINGS

Fig. 1 is an overall right-side view of an assistance suit according to a first embodiment.
Fig. 2 is an overall rear view of the assistance suit according to the first embodiment.
Fig. 3 is an overall front view of the assistance suit according to the first embodiment.
Fig. 4 is a perspective view of a driving device according to the first embodiment.
Fig. 5 is a rear vertical cross-sectional view of the driving device according to the first embodiment.
Fig. 6 is an exploded perspective view of rotating bodies of the driving device according to the first embodiment.
Fig. 7 is a left-side vertical cross-sectional view of the driving device according to the first embodiment.
Fig. 8 is a perspective view of a rotating body according to the first embodiment.
Fig. 9 is a front view of the rotating body according to the first embodiment.
Fig. 10 is a rear view of the rotating body in a state where an inner-wire of a wire according to the first embodiment is located in a groove portion of the rotating body.
Fig. 11 is a rear view of the rotating body in a state where the inner-wire of the wire according to the first embodiment is located between groove portions of the rotating body.
Fig. 12 is a rear view of the rotating body in a state where the inner-wire of the wire according to the first embodiment is located at the left portion of the rotating body.
Fig. 13 is a rear vertical cross-sectional view of the groove portion region of the rotating body according to another aspect the first embodiment.
Fig. 14 is a side view of an assistance suit according to a second embodiment.
Fig. 15 is a rear view of the assistance suit according to the second embodiment.
Fig. 16 is a front view of the assistance suit according to the second embodiment.
Fig. 17 is a top view of the assistance suit according to the second embodiment.
Fig. 18 is a side view of a coupling location between a grip operation tool and wires according to the second embodiment.
Fig. 19 is an exploded perspective view of a stopper according to the second embodiment.
Fig. 20 is a top view of the stopper according to the second embodiment.
Fig. 21 is a perspective view of a wire stopper in an upper end portion of a lifting arm according to the second embodiment.
Fig. 22 is a partial cross-sectional view of an attachment location between the wire stopper and a wire according to the second embodiment.
Fig. 23 is an illustrative diagram showing a removed/inserted state of a screwing member relative to the wire stopper according to the second embodiment.
Fig. 24 is a side view of a coupling location between a grip operation tool and wires according another aspect of the second embodiment.
Fig. 25 is a side view of a coupling location between a grip operation tool and wires according another aspect of the second embodiment.
Fig. 26 is an illustrative diagram showing coupling locations between a reel device and wires according to another aspect the second embodiment.
Fig. 27 is a side view of an assistance suit according to another aspect of the second embodiment.
Fig. 28 is a partial cross-sectional diagram in a side view of a stopper according to another aspect of the second embodiment.
Fig. 29 is a partial cross-sectional diagram in a side view of a stopper according to another aspect of the second embodiment.
Fig. 30 is a partial cross-sectional diagram in a side view of a stopper according to another aspect of the second embodiment.
Fig. 31 is a partial cross-sectional diagram in a side view of a stopper according to another aspect of the second embodiment.
Fig. 32 is a side view of an assistance suit according to a third embodiment.
Fig. 33 is a rear view of the assistance suit according to the third embodiment.
Fig. 34 is a front view of the assistance suit according to the third embodiment.
Fig. 35 is a top view of the assistance suit according to the third embodiment.
Fig. 36 is a perspective view of the assistance suit according to the third embodiment in a state where leg belts are spread open.
Fig. 37 is an exploded perspective view of a region including a gear mechanism according to the third embodiment.
Fig. 38 is an exploded perspective view of a first adjustment mechanism according to the third embodiment.
Fig. 39 is a cross-sectional diagram in a top view of a region including the first adjustment mechanism, a gear mechanism, and swingable arm portions according to the third embodiment.
Fig. 40 is an illustrative diagram in a top view of a region including a second adjustment mechanism according to another aspect of the third embodiment.
Fig. 41 is an illustrative diagram in a front view of a second adjustment mechanism according to another aspect of the third embodiment.
Fig. 42 is a perspective view of a region including swingable arm portions according to another aspect of the third embodiment.
Fig. 43 is a side view of an assistance suit according to another aspect of the third embodiment.
Fig. 44 is a side view of an assistance suit according to another aspect of the third embodiment.

### EMBODIMENTS OF THE INVENTION

### (1) First Embodiment

A first embodiment, which is one example of the present invention, will be described below with reference to the drawings.

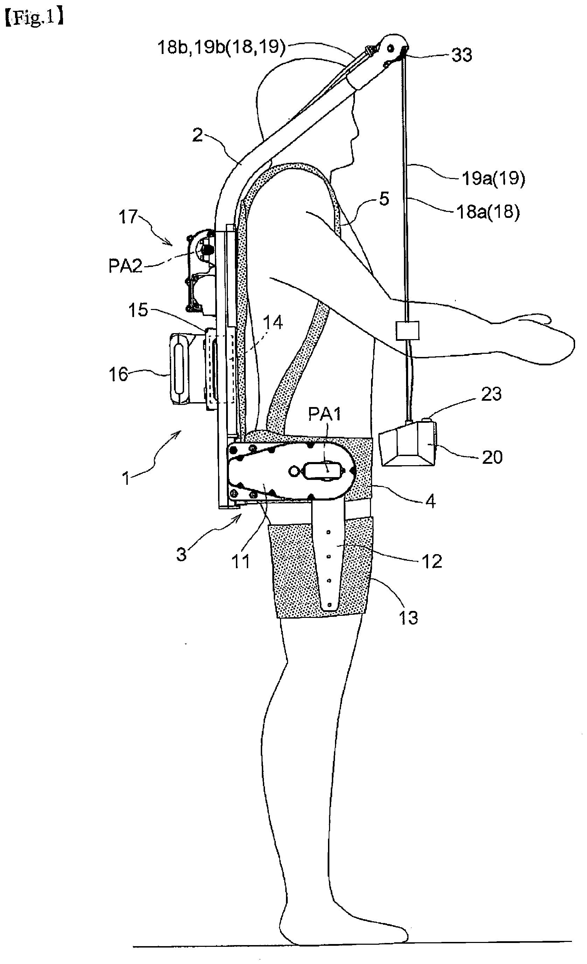

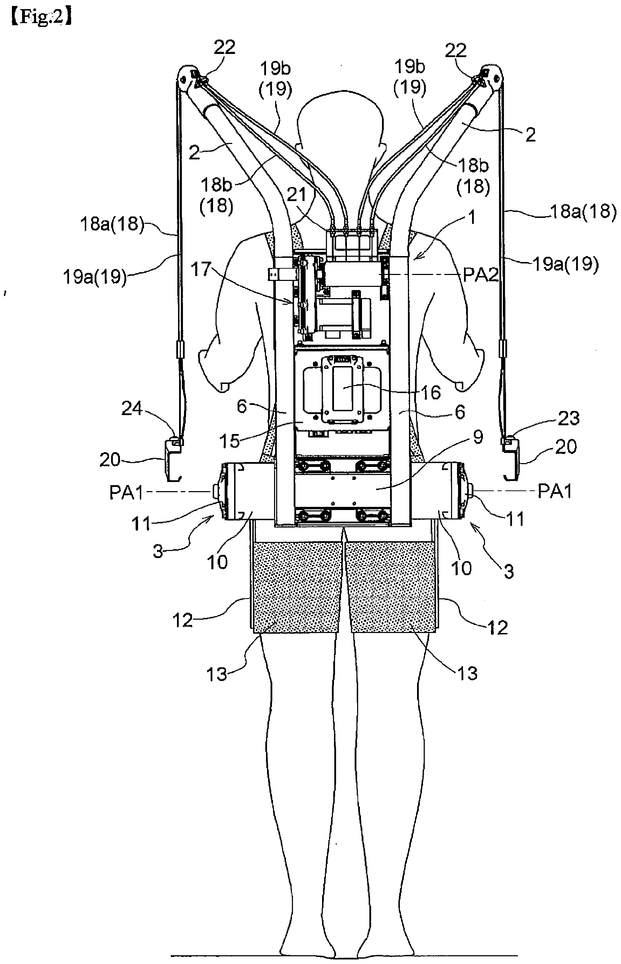

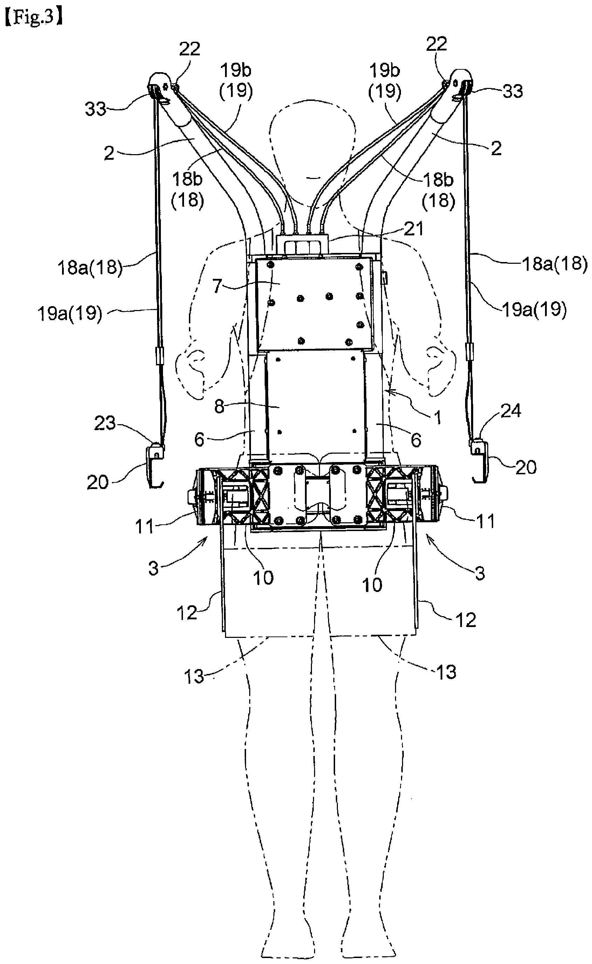

As shown in Figs. 1 to 3, an assistance suit includes a main body portion 1 for attachment to the back portion (mid back portion) of a worker, right and left arm portions 2 that extend upward from an upper portion of the main body portion 1, and right and left leg action portions 3 that are provided on a lower portion of the main body portion 1, and further includes an attachment belt 4 and right and left shoulder belts 5 for being worn by the worker.

As shown in Figs. 1 to 3, the main body portion 1 includes right and left vertical frames 6, support plates 7, 8 that are coupled to and span between upper portions and intermediate portions of the right and left vertical frames 6, a horizontal frame 9 that is coupled to and spans between lower portions of the right and left vertical frames 6, etc., and the main body portion 1 has a framework configuration. The attachment belt 4 is attached to the right and left leg action portions 3, and the right and left shoulder belts 5 are attached to the right and left vertical frames 6. A control device 14 is coupled to the rear face of the support plate 8, and a battery 16 is coupled to a support plate 15 that is coupled to the support plate 8 and covers the rear side of the control device 14.

Accordingly, as shown in Figs. 1 to 3, the main body portion 1 is attached the back portion of the worker by inserting the right and left arm portions (right and left shoulder portions) of the worker into the right and left shoulder belts 5, and wrapping and fixing the attachment belt 4 around the waist portion of the worker.

As shown in Figs. 1 to 3, the weight of the assistance suit and a load is mainly borne by the waist portion of the worker via the attachment belt 4, and the weight of the assistance suit and the load is stably supported by the waist portion of the worker. The right and left shoulder belts 5 exhibit a function of mainly preventing a state in which the main body portion 1 becomes separated rearward from the back portion of the worker.

[2]
Next, the right and left leg action portions 3 will be described.

As shown in Figs. 1 to 3, the right and left leg action portions 3 each include a base portion 10, a transmission case 11, an operation arm 12, a leg belt 13, etc. The base portions 10 are supported to the horizontal frame 9 so as to be capable of sliding in the right-left direction, and the transmission cases 11 are coupled in a forward-facing manner to the outer end portions of the base portions 10.

As shown in Figs. 1 to 3, the operation arms 12 are supported in a front portion of the transmission cases 11 so as to be capable of swinging about a horizontal axis PA1 along the right-left direction, and the wide belt-shaped leg belts 13 are coupled to end portions of the operation arms 12. Transmission mechanisms (not shown) configured by flat gears are provided inside the transmission cases 11, electrical motors (not shown) extend in the right-left direction inside the base portions 10, and the operation arms 12 are driven to swing about the horizontal axis PA1 by the electrical motors via the transmission mechanisms.

As described in section 1 above, in the case of attaching the main body portion 1 to the back portion of the worker, when the worker wraps and fixes the attachment belt 4 around their waist portion, the right and left leg action portions 3 (base portions 10) can move in the right-left direction along the horizontal frame 9 together with the attachment belt 4.

Accordingly, by adjusting the wrapping of the attachment belt 4 around the waist portion, the space between the right and left leg action portions 3 is set so as to fit the worker's physique, and the positions of the right and left leg action portions 3 are determined by the attachment belt 4.

Thereafter, as shown in Figs. 1 to 3, the worker wraps the leg belts 13 around their thigh portions, and fixes the leg belts 13 to their thigh portions with use of hook-and-loop fasteners (product name: Velcro (registered trademark)). The attachment of the assistance suit to the worker described above is thus complete.

[3]
Next, the right and left arm portions 2 will be described.

As shown in Figs. 1 to 3, the upper portions of the right and left vertical frames 6 extend diagonally upward beyond the right and left shoulder portions of the worker, and constitute the right and left arm portions 2. Guide pulleys 33 are rotatably supported to upper end portions of the right and left arm portions 2.

As shown in Figs. 1 to 3, a driving device 17 is coupled to the back face of the support plate 7, and two right wires 18 and 19 and two left wires 18 and 19 extend from the driving device 17. A support member 21 is coupled to an upper portion of the support plate 7, a support member 22 is provided at an upper portion of each of the right and left arm portions 2, outer-wires 18b and 19b of the wires 18 and 19 are coupled to the support members 21 and 22, and inner-wires 18a and 19a of the wires 18 and 19 are connected to the driving device 17.

As shown in Figs. 1 to 3, the inner-wires 18a and 19a of the two right wires 18 and 19 are hung on and extend downward from one of the guide pulleys 33, and a right hand portion 20 is coupled to the inner-wires 18a and 19a of the two right wires 18 and 19. The inner-wires 18a and 19a of the two left wires 18 and 19 are hung on and extend downward from the other guide pulley 33, and a left hand portion 20 is coupled to the inner-wires 18a and 19a of the two left wires 18 and 19.

As shown in Figs. 1 to 3, the right and left hand portions 20 are each constituted by a metallic plate member bent to have the cross-sectional shape of a sharp-cornered "C" (hook shape), and have right-left symmetrical shapes. A push-button type of raising operation switch 23 (corresponding to "manual operation portion") is provided in the right hand portion 20, and a push-button type of lowering operation switch 24 (corresponding to "manual operation portion") is provided in the left hand portion 20. The raising operation switch 23 and the lowering operation switch 24 are each connected to the control device 14 via a harness (not shown).

As described in sections 1 and 2 above, when the assistance suit is worn by the worker, the worker grips the right hand portion 20 in their right hand, and grips the left hand portion 20 in their left hand.

In the above-described state, the worker operates the raising operation switch 23 and the lowering operation switch 24 by pressing them with their right and left thumbs. In this case, the raising operation switch 23 and the lowering operation switch 24 each have a self-resetting configuration. When the worker presses the raising operation switch 23, a signal is output from the raising operation switch 23, and when the worker stops pressing the raising operation switch 23, the output of the signal from the raising operation switch 23 stops. Also, when the worker presses the lowering operation switch 24, a signal is output from the lowering operation switch 24, and when the worker stops pressing the lowering operation switch 24, the output of the signal from the lowering operation switch 24 stops.

[4]
In the case where a load placed on the floor is to be placed on a high shelf or truck bed for example, it is envisioned that the worker squats and places their hands on the load on the floor, then rises while holding the load with their hands stretched downward, then lifts the load up, and places it on the high shelf or truck bed.

The following describes the operation of the right and left leg action portions 3 and the driving device 17 under control of the control device 14 based on operations for pressing the raising operation switch 23 and the lowering operation switch 24 in the above-described state.

As shown in Figs. 1 to 3, when the assistance suit is worn by the worker, if both the raising operation switch 23 and the lowering operation switch 24 are not pressed by the worker, the driving device 17 is stopped, and the electrical motors of the right and left leg action portions 3 are in the stopped state (free rotation state).

Accordingly, if the worker walks or bends their knees to lower their waist portion (squats), the operation arms 12 swing to follow the thigh portions of the worker, and the movement of the worker is not hindered.

Next, in the case where the worker squats and grabs the load on the floor, if the worker then presses the lowering operation switch 24, the inner-wires 18a and 19a of the wires 18 and 19 are unwound from the driving device 17, and the right and left hand portions 20 descend. When the pressing of the lowering operation switch 24 stops, the driving device 17 stops, and the right and left hand portions 20 stop.

As will be described in section 6 below, the driving device 17 is provided with a braking function. Accordingly, while the driving device 17 is stopped, the inner-wires 18a and 19a of the wires 18 and 19 are not unwound from the driving device 17, and the right and left hand portions 20 do not descend even if the weight of the load is applied to the right and left hand portions 20 as will be described later.

Next, the worker grabs the right (left) hand portion 20 with their right (left) hand and places the right and left hand portions 20 on the load, and then the worker lifts the load from the floor by standing up. In this state, if the worker presses the raising operation switch 23, the right and left leg action portions 3 are moved downward, and the thigh portions of the worker are moved downward, thus assisting the standing-up of the worker.

When the worker stands up as previously described, the right and left hand portions 20 (the load) do not descend due to the previously-described braking function of the driving device 17.

As previously described, after the worker has stood up while pressing the raising operation switch 23, if it is detected that the right and left leg action portions 3 have reached a position of facing substantially straight downward, it is determined that the worker has completely stood up, and the electrical motors of the right and left leg action portions 3 are put in the stopped state (free rotation state).

Next, the driving device 17 operates, the inner-wires 18a and 19a of the wires 18 and 19 are wound by the driving device 17, and the right and left hand portions 20 (the load) rise. When the right and left hand portions 20 (the load) have risen to a desired position, by stopping the pressing of the raising operation switch 23, the driving device 17 stops, and the right and left hand portions 20 (the load) stop.

Next, the worker walks to the high shelf, the truck bed, or the like on which the load is to be placed. When the worker arrives at the high shelf, the truck bed, or the like, the worker presses the lowering operation switch 24, the right and left hand portions 20 (the load) are lowered, the load is placed on the high shelf, the truck bed, or the like, and then the right and left hand portions 20 are separated from the load.

As described above, when the load is placed on the high shelf, the truck bed, or the like, the initial state is returned to, and similar operations are performed with respect to the next load.

[5]
The following describes the overall configuration of the driving device 17, as well as an electrical motor 29 and a transmission mechanism 30 in the driving device 17.

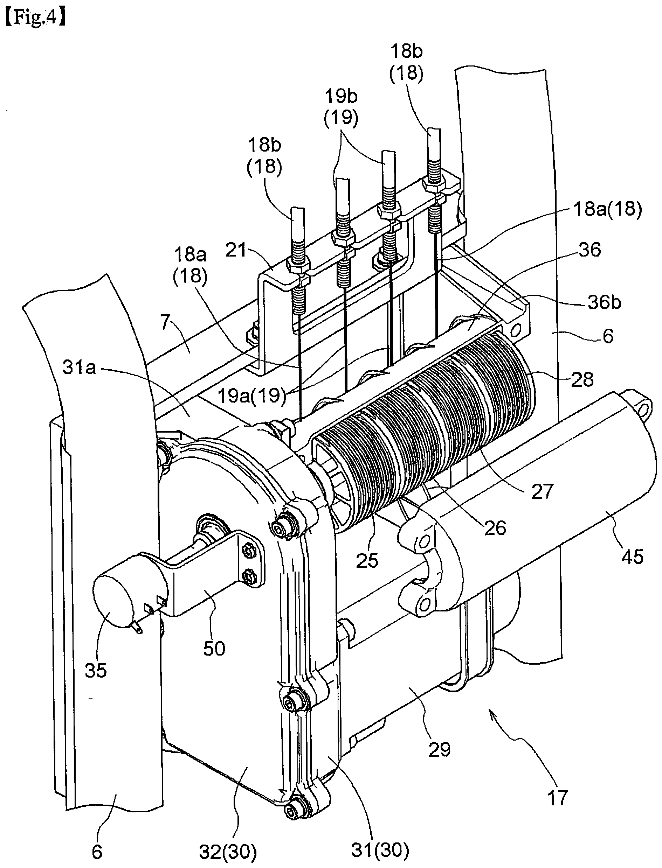

As shown in Figs. 4 to 6, the driving device 17 includes four rotating bodies 25, 26, 27, and 28 that are arranged along the right-left direction and are capable of rotating about a rotation axis PA2 along the right-left direction, the electrical motor 29 that is arranged extending along the right-left direction below the four rotating bodies 25 to 28, and the transmission mechanism 30 that is arranged extending in the up-down direction and spans the end portion of the electrical motor 29 on an output shaft 29a side and a left-side end portion of the rotating bodies 25 to 28 (the end portion on the same side as the output shaft 29a of the electrical motor 29).

As shown in Figs. 4 to 6, the transmission mechanism 30 includes a transmission case 31 and a lid portion 32. Leg portions 31a provided on the transmission case 31 are coupled to the support plate 7 using bolts. The end portion of the electrical motor 29 on the output shaft 29a side is coupled to a lower portion of the transmission case 31. Leg portions 29c of the electrical motor 29 are coupled to the support plate 7 by bolts. In this way, by coupling the electrical motor 29 to the transmission mechanism 30, the electrical motor 29 is in a state of being coupled to the main body portion 1 via the transmission mechanism 30.

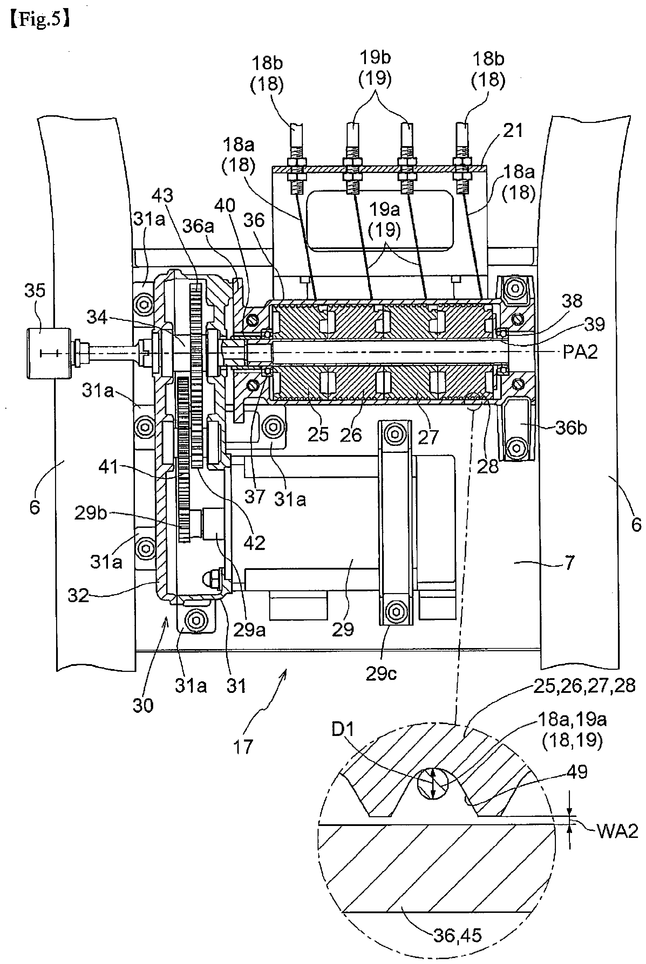

As shown in Fig. 5, a large-diameter first gear 41 and a small-diameter second gear 42 are supported in an intermediate portion in the transmission case 31 and the lid portion 32 so as to be capable of rotating integrally, and an output gear 29b coupled to the output shaft 29a of the electrical motor 29 is meshed with the first gear 41.

A transmission shaft 34 is rotatably supported in an upper portion in the transmission case 31 and the lid portion 32, and the transmission shaft 34 projects rightward and leftward from the transmission case 31 and the lid portion 32. A third gear 43 is fixed to the transmission shaft 34, and the third gear 43 is meshed with the second gear 42.

As shown in Figs. 4 to 6, a bracket 50 is coupled to the lid portion 32, an angle sensor 35 (rotary encoder) is coupled to the bracket 50, and the angle sensor 35 is connected to the left-side end portion of the transmission shaft 34.

[6]
Next, the support structure for the rotating bodies 25 to 28 in the driving device 17 will be described.

As shown in Figs. 4 to 6, a semi-cylindrical support member 36 (corresponding to "cover" "fixing portion") is provided. A semi-circular flange portion 36a (corresponding to "first bearing portion") is provided on a left-side end portion of the support member 36 (the end portion on the same side as the output shaft 29a of the electrical motor 29). The flange portion 36a is coupled to an upper portion of the transmission case 31. Accordingly, the flange portion 36a of the support member 36 is in a state of being coupled to the support plate 7 (the main body portion 1) via the transmission case 31 (the transmission mechanism 30).

As shown in Figs. 4 to 6, a leg portion 36b (corresponding to "second bearing portion") is provided in the right-side end portion of the support member 36 (the end portion on the side opposite to the output shaft 29a of the electrical motor 29). The leg portion 36b is coupled to the support plate 7 (the main body portion 1) using bolts.

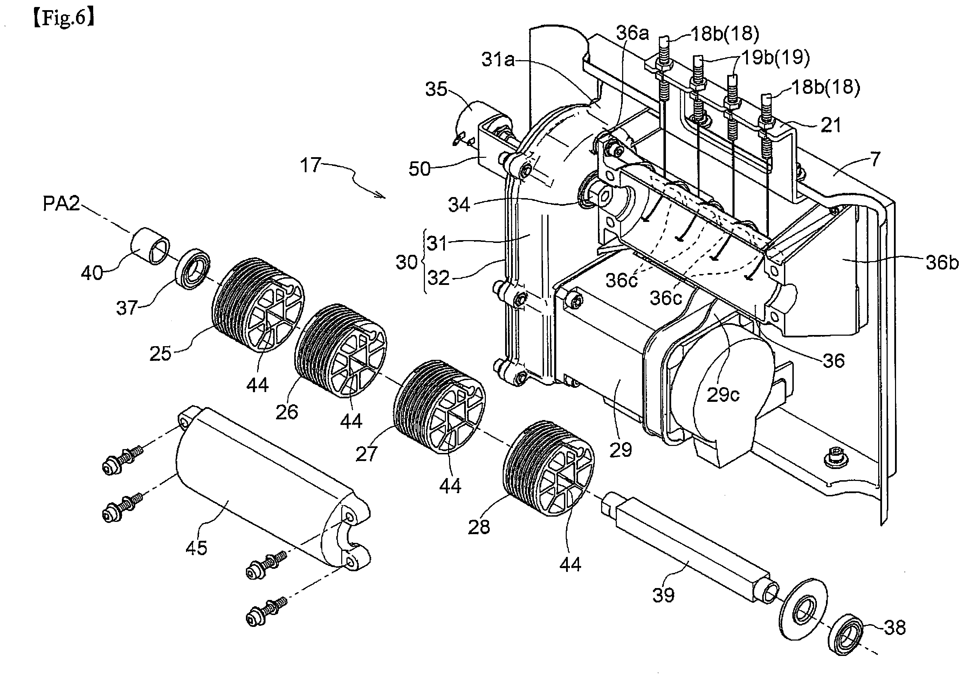

As shown in Figs. 5 and 6, bearings 37 are supported in the flange portion 36a of the support member 36, and bearings 38 are supported in the leg portion 36b of the support member 36. A drive shaft 39 having a square cross-section is supported by the bearings 37 and 38 so as to be capable of rotating about the rotation axis PA2. The drive shaft 39 and the transmission shaft 34 are coupled by a cylindrical coupling member 40.

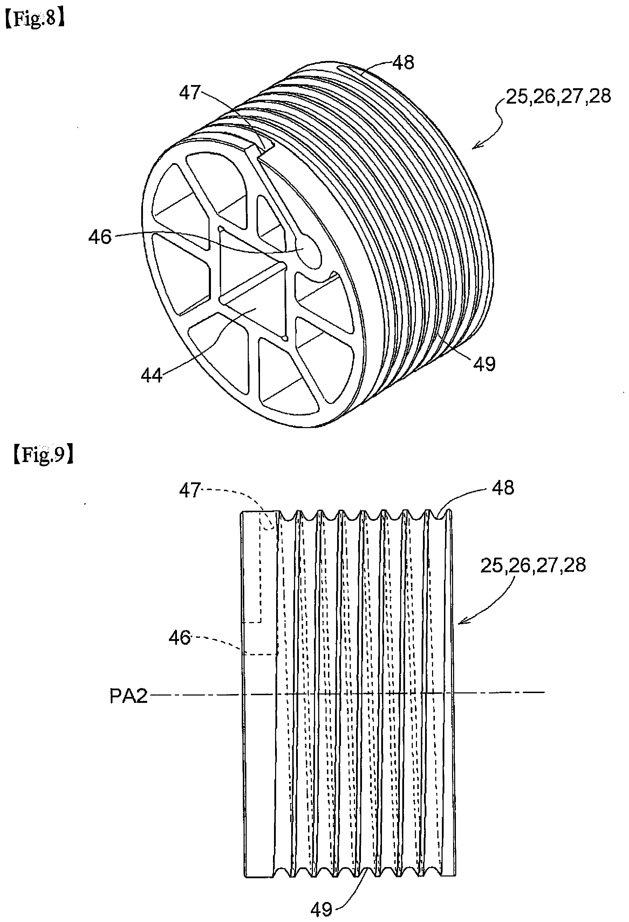

As shown in Figs. 6 and 8, the rotating bodies 25 to 28 are made of a synthetic resin and are shaped as circular columns, and an attachment hole 44 having a square cross-section is formed in the central portion of each of them. The rotating bodies 25 to 28 are attached to the drive shaft 39 by inserting the drive shaft 39 through the attachment holes 44.

As shown in Figs. 4 and 6, a semi-cylindrical cover member 45 (corresponding to "cover" "detachable portion") made of a transparent synthetic resin is provided. The cover member 45 is coupled to the flange portion 36a and the leg portion 35b of the support member 36 using bolts. The bearings 37 and 38 are fixed by the cover member 45. The outer circumferential surfaces of the rotating bodies 25 to 28 are covered by the support member 36 and the cover member 45.

Accordingly, the left-side end portion (the end portion on the same side as the output shaft 29a of the electrical motor 29) of the rotating bodies 25 to 28 (the drive shaft 39) is in a state of being supported to the flange portion 36a of the support member 36 via the bearings 37. The right-side end portion (the end portion on the side opposite to the output shaft 29a of the electrical motor 29) of the rotating bodies 25 to 28 (the drive shaft 39) is in a state of being supported to the leg portion 36b of the support member 36 via the bearings 38.

According to the above structure, motive power from the electrical motor 29 is transmitted to the drive shaft 39 via the transmission mechanism 30 (the first gear 41, the second gear 42, and the third gear 43), and the rotating bodies 25 to 28 (the drive shaft 39) are driven to rotate in the winding direction and the unwinding direction.

The electrical motor 29 is provided with an electromagnetic brake (not shown). When the electrical motor 29 operates, the electromagnetic brake is in the disengaged state, and when the electrical motor 29 is stopped or power is not supplied thereto, the electromagnetic brake is in the braking state.

As shown in Figs. 4 and 6, by removing the cover member 45 from the support member 36, it is possible to remove the bearings 37 and 38 from the flange portion 36a and the leg portion 36b of the support member 36. Also, by pulling the drive shaft 39 out from the coupling member 40, it is possible to remove the rotating bodies 25 to 28 and the drive shaft 39. By removing the rotating bodies 25 to 28 and the drive shaft 39 in this way, it is possible to pull the rotating bodies 25 to 28 off of the drive shaft 39 and replace the rotating bodies 25 to 28.

[7]
Next, the rotating bodies 25 to 28 of the driving device 17 will be described.

As shown in Figs. 8 and 9, the rotating bodies 25 to 28 are made of a synthetic resin and are shaped as circular columns, and an attachment hole 44 having a square cross-section is formed in the central portion of each of them. Attachment portions 46 for attachment of the inner-wires 18a and 19a of the wires 18 and 19 are provided in right side faces of the rotating bodies 25 to 28. Groove portions 47 connected to the attachment portions 46 are provided in right-side portions of the outer circumferential surfaces of the rotating bodies 25 to 28.

As shown in Figs. 8 and 9, one continuous groove portion 49 is provided extending from a left-side portion 48, with respect to the rotation axis PA2 direction, of the outer circumferential surface of each of the rotating bodies 25 to 28, and connects the groove portion 47 to the left-side portion 48 while spiraling (in a male thread shape) multiple times around the outer circumferential surface of each of the rotating bodies 25 to 28.

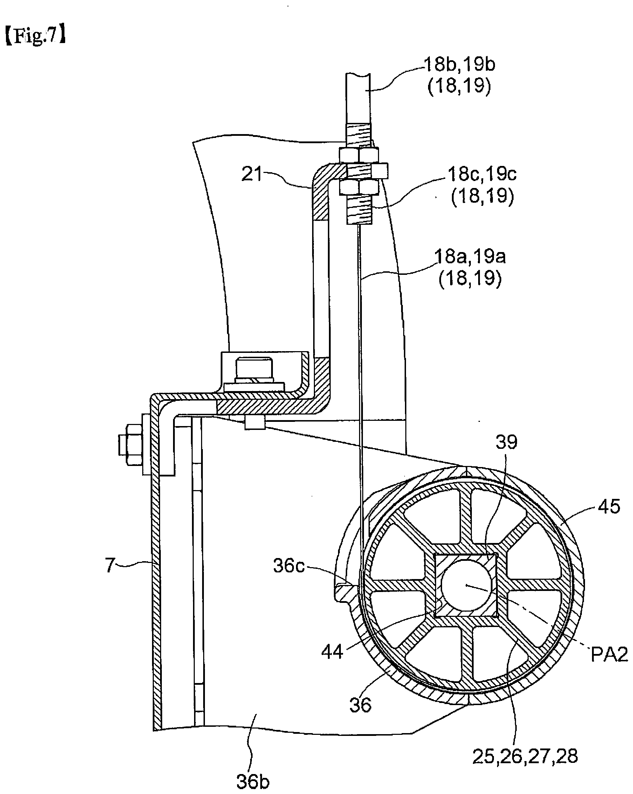

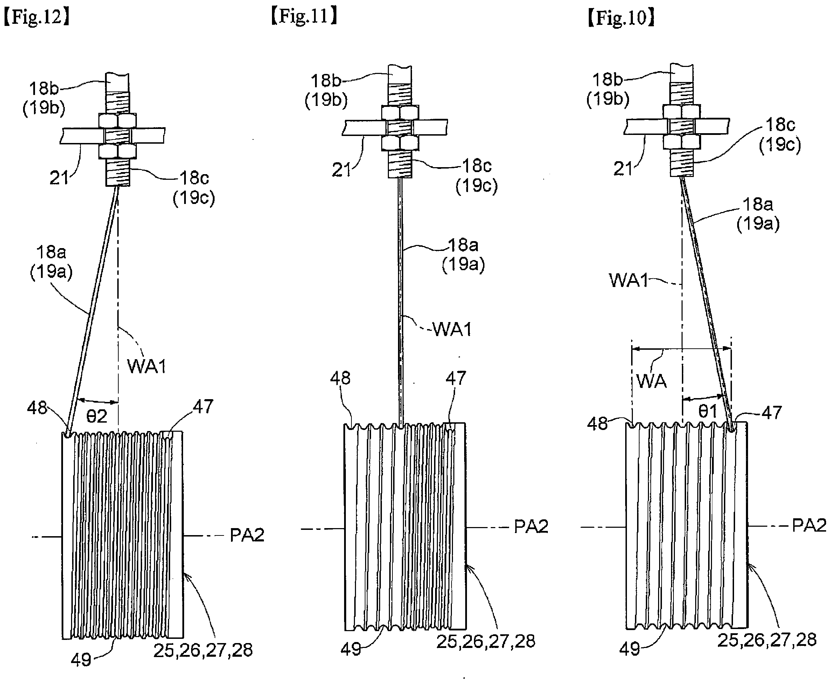

As shown in Figs. 7 and 10, end portions 18c and 19c of the outer-wires 18b and 19b of the wires 18 and 19 are coupled to the support member 21, and four opening portions 36c provided in the support member 36 facing the four rotating bodies 25 to 28.

As shown in Figs. 4 and 7, the inner-wire 18a of the left wire 18 passes through the opening portion 36c that faces the rotating body 25 of the support member 36, and the end portion of the inner-wire 18a of the left wire 18 is attached to the attachment portion 46 of the rotating body 25. The inner-wire 19a of the left wire 19 passes through the opening portion 36c that faces the rotating body 26 of the support member 36, and the end portion of the inner-wire 19a of the left wire 19 is attached to the attachment portion 46 of the rotating body 26.

As shown in Figs. 4 and 7, the inner-wire 18a of the right wire 18 passes through the opening portion 36c that faces the rotating body 28 of the support member 36, and the end portion of the inner-wire 18a of the right wire 18 is attached to the attachment portion 46 of the rotating body 28. The inner-wire 19a of the right wire 19 passes through the opening portion 36c that faces the rotating body 27 of the support member 36, and the end portion of the inner-wire 19a of the right wire 19 is attached to the attachment portion 46 of the rotating body 27.

[8]
The following describes how the inner-wires 18a and 19a of the wires 18 and 19 are wound around the rotating bodies 25 to 28 of the driving device 17.

As shown in Fig. 10, the end portions 18c and 19c of the outer-wires 18b and 19b of the wires 18 and 19 are arranged at a position WA1, which is a position facing the outer circumferential surfaces of the rotating bodies 25 to 28 and facing the central portion, with respect to the rotation axis PA2 direction, of a range WA of the groove portions 49 in the outer circumferential surfaces of the rotating bodies 25 to 28.

In the state shown in Fig. 10, the inner-wires 18a and 19a of the wires 18 and 19 are completely unwound from the rotating bodies 25 to 28, and the inner-wires 18a and 19a of the wires 18 and 19 are located at the groove portions 47 of the rotating bodies 25 to 28 and are not inside the groove portions 49.

In a rear view of the state shown in Fig. 10, the inner-wires 18a and 19a of the wires 18 and 19 extend from the end portions 18c and 19c of the outer-wires 18b and 19b of the wires 18 and 19 toward the groove portions 47 of the rotating bodies 25 to 28. The space between the rotating bodies 25 to 28 and the support member 21 is set relatively large, and therefore an angle θ1 formed by the inner-wires 18a and 19a of the wires 18 and 19 and the groove portions 47 of the rotating bodies 25 to 28 is small.

When the rotating bodies 25 to 28 are driven to rotate in the winding direction (counter-clockwise direction with respect to the paper surface of Fig. 7) in the state shown in Fig. 10, the inner-wires 18a and 19a of the wires 18 and 19 successively move from the groove portions 47 into the groove portions 49 in the rotating bodies 25 to 28, the inner-wires 18a and 19a of the wires 18 and 19 are wrapped in a spiral manner around the outer circumferential surfaces of the rotating bodies 25 to 28 along the groove portions 49 of the rotating bodies 25 to 28, and thus the inner-wires 18a and 19a of the wires 18 and 19 are wound around the rotating bodies 25 to 28.

Accordingly, in a rear view, the inner-wires 18a and 19a of the wires 18 and 19 start from the state facing the groove portions 47 of the rotating bodies 25 to 28 (see Fig. 10), and move toward the position WA1 that faces the central portion of the range WA (see Fig. 11).

In this case, the inner-wires 18a and 19a of the wires 18 and 19 successively move from the groove portions 47 of the rotating bodies 25 to 28 into the groove portions 49, and subsequent portions of the inner-wires 18a and 19a of the wires 18 and 19 do not become wound around the first portions of the inner-wires 18a and 19a of the wires 18 and 19 (the inner-wires 18a and 19a of the wires 18 and 19 do not become wound in an overlapping manner).

When the rotating bodies 25 to 28 are further driven to rotate in the winding direction (counter-clockwise direction with respect to the paper surface of Fig. 7) from the state shown in Fig. 11, the inner-wires 18a and 19a of the wires 18 and 19 successively move from the groove portions 47 of the rotating bodies 25 to 28 into the groove portions 49, and in a rear view, the inner-wires 18a and 19a of the wires 18 and 19 pass through the position WA1 that faces the central portion of the range WA, and then move toward the left-side portions 48 of the rotating bodies 25 to 28 (see Fig. 12).

In the state shown in Fig. 12, the space between the rotating bodies 25 to 28 and the support member 21 is set relatively large, and therefore an angle θ2 formed by the inner-wires 18a and 19a of the wires 18 and 19 and the left-side portions 48 of the rotating bodies 25 to 28 is small.

As shown in Fig. 12, the rotating bodies 25 to 28 are driven to rotate in the winding direction until the inner-wires 18a and 19a of the wires 18 and 19 reach the left-side portions 48 of the rotating bodies 25 to 28, and accordingly the inner-wires 18a and 19a of the wires 18 and 19 enter all portions of the groove portions 49 of the rotating bodies 25 to 28, and thus the rotating bodies 25 to 28 cannot be further driven to rotate in the winding direction.

When the angle sensor 35 detects that the rotating bodies 25 to 28 have rotated to the extent where the inner-wires 18a and 19a of the wires 18 and 19 have reached the left-side portions 48 of the rotating bodies 25 to 28, the electrical motor 29 automatically stops.

[9]
The following describes how the inner-wires 18a and 19a of the wires 18 and 19 are unwound from the rotating bodies 25 to 28 of the driving device 17.

As shown in Fig. 12, in the state where the rotating bodies 25 to 28 have been driven to rotate in the winding direction to the extent that the inner-wires 18a and 19a of the wires 18 and 19 have reached the left-side portions 48 of the rotating bodies 25 to 28, when the rotating bodies 25 to 28 are driven to rotate in the unwinding direction (the clockwise direction with respect to the paper surface of Fig. 7), the inner-wires 18a and 19a of the wires 18 and 19 successively move out of the groove portions 49 of the rotating bodies 25 to 28 (the left-side portions 48 of the rotating bodies 25 to 28), and the inner-wires 18a and 19a of the wires 18 and 19 are unwound from the rotating bodies 25 to 28.

Accordingly, in a rear view, the inner-wires 18a and 19a of the wires 18 and 19 start from the state facing the left-side portions 48 of the rotating bodies 25 to 28 (see Fig. 12), and move toward the position WA1 that faces the central portion of the range WA (see Fig. 11).

When the rotating bodies 25 to 28 are further driven to rotate in the unwinding direction (clockwise direction with respect to the paper surface of Fig. 7) from the state shown in Fig. 11, the inner-wires 18a and 19a of the wires 18 and 19 successively move out of the groove portions 49 of the rotating bodies 25 to 28, and in a rear view, the inner-wires 18a and 19a of the wires 18 and 19 pass through the position WA1 that faces the central portion of the range WA, and then move toward the groove portions 47 of the rotating bodies 25 to 28 (see Fig. 10).

As shown in Fig. 10, when the rotating bodies 25 to 28 have been driven to rotate in the unwinding direction to the extent that the inner-wires 18a and 19a of the wires 18 and 19 have reached the groove portions 47 of the rotating bodies 25 to 28, the inner-wires 18a and 19a of the wires 18 and 19 have moved out of all portions of the groove portions 49 of the rotating bodies 25 to 28, and thus the rotating bodies 25 to 28 cannot be further driven to rotate in the unwinding direction.

Accordingly, when the angle sensor 35 detects that the rotating bodies 25 to 28 have rotated to the extent where the inner-wires 18a and 19a of the wires 18 and 19 have reached the groove portions 47 of the rotating bodies 25 to 28, the electrical motor 29 automatically stops.

For example, after the electrical motor 29 is stopped in a midway state as shown in Fig. 11, if the rotating bodies 25 to 28 are driven to rotate in the winding direction, similarly to the description in section 8, the inner-wires 18a and 19a of the wires 18 and 19 successively move into the groove portions 49 of the rotating bodies 25 to 28, and the inner-wires 18a and 19a of the wires 18 and 19 are wrapped in a spiral manner on the outer circumferential surface of the rotating bodies 25 to 28 along the groove portions 49 of the rotating bodies 25 to 28.

Similarly, after the electrical motor 29 is stopped in a midway state as shown in Fig. 11, if the rotating bodies 25 to 28 are driven to rotate in the unwinding direction, similarly to the description in section 9, the inner-wires 18a and 19a of the wires 18 and 19 successively move out of the groove portions 49 of the rotating bodies 25 to 28, and the inner-wires 18a and 19a of the wires 18 and 19 are unwound from the rotating bodies 25 to 28.

[10]
Next, the relationship between the rotating bodies 25 to 28 in the driving device 17 and the support member 36 and cover member 45 will be described.

As shown in Figs. 4 and 7, the inner surfaces of the support member 36 and the cover member 45 are cylindrical, and the inner surfaces of the support member 36 and the cover member 45 are in the vicinity of the outer circumferential surfaces of the rotating bodies 25 to 28.

As shown in Fig. 5, relative to an outer diameter D1 of the inner-wires 18a and 19a of the wires 18 and 19, the depth of the groove portions 49 of the rotating bodies 25 to 28 is sufficiently larger than the outer diameter D1 of the inner-wires 18a and 19a of the wires 18 and 19.

Accordingly, when the inner-wires 18a and 19a of the wires 18 and 19 are inside the groove portions 49 of the rotating bodies 25 to 28, the inner-wires 18a and 19a of the wires 18 and 19 are completely inside the groove portions 49 of the rotating bodies 25 to 28.

A space WA2 between the outer circumferential surfaces of the rotating bodies 25 to 28 and the inner faces of the support member 36 and the cover member 45 is set smaller than the outer diameter D1 of the inner-wires 18a and 19a of the wires 18 and 19.

Accordingly, when the inner-wires 18a and 19a of the wires 18 and 19 are inside the groove portions 49 of the rotating bodies 25 to 28 as shown in Fig. 5, the inner faces of the support member 36 and the cover member 45 do not come into contact with the inner-wires 18a and 19a of the wires 18 and 19.

As shown in Fig. 5, even if the inner-wires 18a and 19a of the wires 18 and 19 inside the groove portions 49 of the rotating bodies 25 to 28 attempt to move out from the groove portions 49 of the rotating bodies 25 to 28, the inner-wires 18a and 19a of the wires 18 and 19 come into contact with the inner faces of the support member 36 and the cover member 45 before completely coming out of the groove portions 49 of the rotating bodies 25 to 28, and therefore the inner-wires 18a and 19a of the wires 18 and 19 inside the groove portions 49 of the rotating bodies 25 to 28 are prevented from moving out of the groove portions 49 of the rotating bodies 25 to 28.

The following describes other aspects of the first embodiment described above. These other aspects can be appropriately combined as long as no contradiction arises.

(1-1) The following configuration may be applied to the structure shown in Figs. 4 to 6.

The electrical motor 29 is arranged extending along the right-left direction such that the output shaft 29a of the electrical motor 29 faces rightward below the four rotating bodies 25 to 28, and the transmission mechanism 30 is provided extending along the up-down direction so as to span the end portion of the electrical motor 29 on the output shaft 29a and the right-side end portion of the rotating bodies 25 to 28 (the end portion on the same side as the output shaft 29a of the electrical motor 29).

According to the configuration described above, the flange portion 36a is provided on the right-side end portion of the support member 36, and the leg portion 36b is provided on the left-side end portion of the support member 36.

(1-2) A configuration is possible in which the leg portion 29c of the electrical motor 29 is omitted, and the electrical motor 29 is coupled to the support plate 7 (the main body portion 1) via only the transmission mechanism 30.

Instead of the bearings 37 being supported in the flange portion 36a of the support member 36, the bearings 37 may be supported in the transmission case 31 (the transmission mechanism 30). According to this configuration, the transmission case 31 serves as the first bearing portion.
(1-3) A configuration is possible in which one wire 18 and one rotating body 25 are provided with respect to the right hand portion 20 shown in Figs. 1 to 3, and one wire 18 and one rotating body 28 are provided with respect to the left hand portion 20.
(1-4) The following configuration may be applied to the structure shown in Fig. 5.

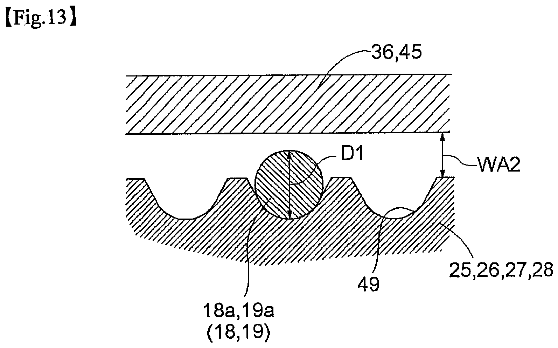

As shown in Fig. 13, relative to the outer diameter D1 of the inner-wires 18a and 19a of the wires 18 and 19, the depth of the groove portions 49 of the rotating bodies 25 to 28 is set to approximately 1/2 the outer diameter D1 of the inner-wires 18a and 19a of the wires 18 and 19.

Accordingly, when the inner-wires 18a and 19a of the wires 18 and 19 are inside the groove portions 49 of the rotating bodies 25 to 28, the inner-wires 18a and 19a of the wires 18 and 19 are exposed a little from the groove portions 49 of the rotating bodies 25 to 28.

Also, the space WA2 between the outer circumferential surfaces of the rotating bodies 25 to 28 and the inner faces of the support member 36 and the cover member 45 may be set to a space that is smaller than the outer diameter D1 of the inner-wires 18a and 19a of the wires 18 and 19 and is larger than 1/2 the outer diameter D1 of the inner-wires 18a and 19a of the wires 18 and 19.

(1-5) A configuration is possible in which the right and left arm portions 2 are omitted, and one arm portion 2 is provided.

In the case of the above configuration, two wires 18 extend from the one arm portion 1, the right hand portion 20 is provided on one of the two wires 18, and the left hand portion 20 is provided on the other one of the two wires 18.

Also, a configuration is possible in which one wire 18 extends from one arm portion 2, the end portion of the one wire 18 is branched into two branches, the right hand portion 20 is provided on one of the branch portions, and the left hand portion 20 is provided on the other branch portion.

(1-6) A configuration is possible in which the right and left leg action portions 3 are not provided. A configuration is possible in which the battery 16 is coupled to the rear face of the horizontal frame 9 instead of the support plate 15.

### (2) Second Embodiment

A second embodiment, which is not part of the present invention, will be described below with reference to the drawings.

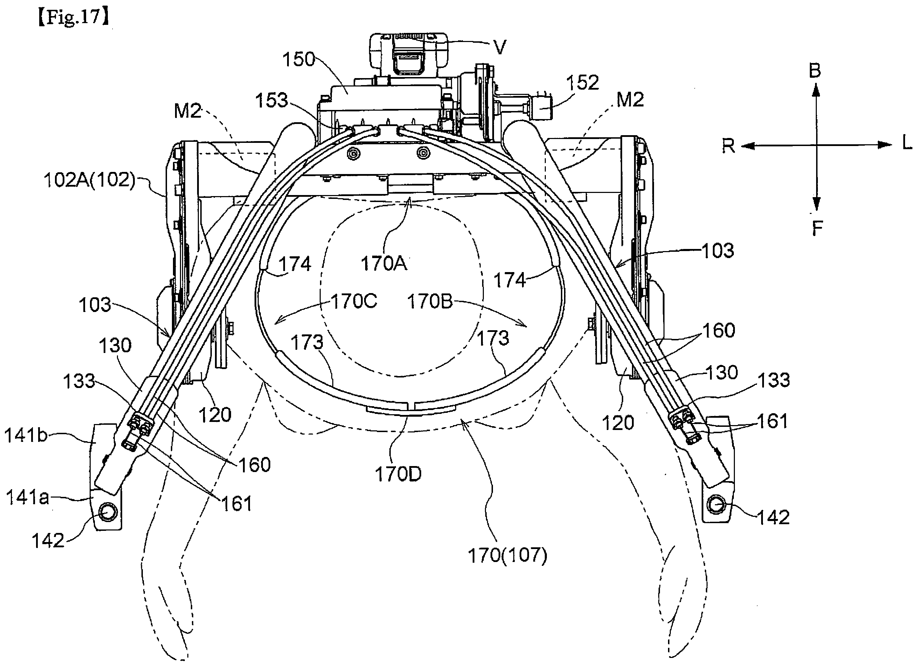

The front-rear direction and the right-left direction in the description of the second embodiment are as described below unless particular stated otherwise. Specifically, with the user wearing the assistance suit on their back portion (mid back portion) serving as the origin, the direction corresponding to forward relative to the user (see arrow F in Fig. 17) indicates the "front" direction of the assistance suit. Similarly, the direction corresponding to rearward (see arrow B in Fig. 17) indicates the "back" direction, the direction corresponding to rightward (see arrow R in Fig. 17) indicates the "right" direction, and the direction corresponding to leftward (see arrow L in Fig. 17) indicates the "left" direction.

Also, although not illustrated, cover members made of a synthetic resin or metal are provided on appropriate portions of the assistance suit in order to cover moving portions and portions that need protection.

### Overall configuration

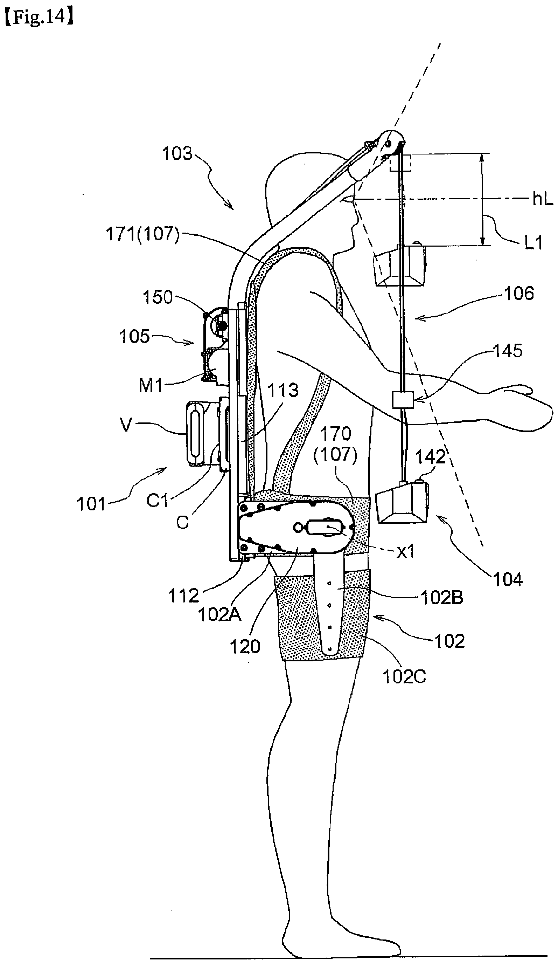

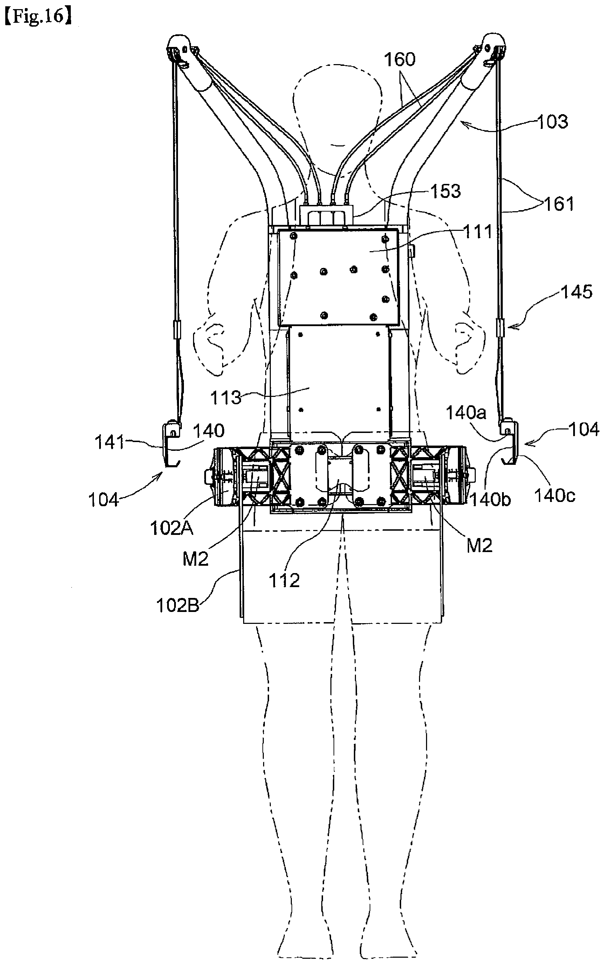

Figs. 14 to 17 show an example of an assistance suit of the second embodiment.

This assistance suit includes a main body portion 101 that has a flattened shape and can be worn on the user's back with use of a belt attachment tool 107.

A later-described leg portion operation device 102 and lifting arms 103 are attached to this main body portion 101, and grip operation tools 104 are attached to the lifting arms 103 via operation wires 106 (corresponding to "cord elements").

Also, the main body portion 101 is provided with a winding winch 105 for driving the grip operation tools 104 attached via the operation wires 106, a control device C that controls operations of the leg portion operation device 102 and the winding winch 105, and a battery V for power supply, for example.

### Configuration of main body portion

The main body portion 101 is configured as a single body having a rectangular frame shape, and includes a pair of right and left vertical frames 110 that are made of a metal pipe and are provided upright along the up-down direction with a predetermined space therebetween, and a pair of upper and lower horizontal frames 111 and 112 that connect vertically intermediate portions of the vertical frames 110 together, as well as lower portions of the same together. The integration of the right and left vertical frames 110 and the upper and lower horizontal frames 111 and 112 can be performed by applying a means such as coupling by welding or coupling with use of bolts.

Lifting arms 103 that extend forward to a position beyond the shoulder portions of a user are provided in an upper portion of the main body portion 101. These lifting arms 103 are configured by metal pipe portions that extend diagonally forward and upward from upper portions of the vertical frames 110, and later-described grip operation tools 104 are attached thereto in a suspended state.

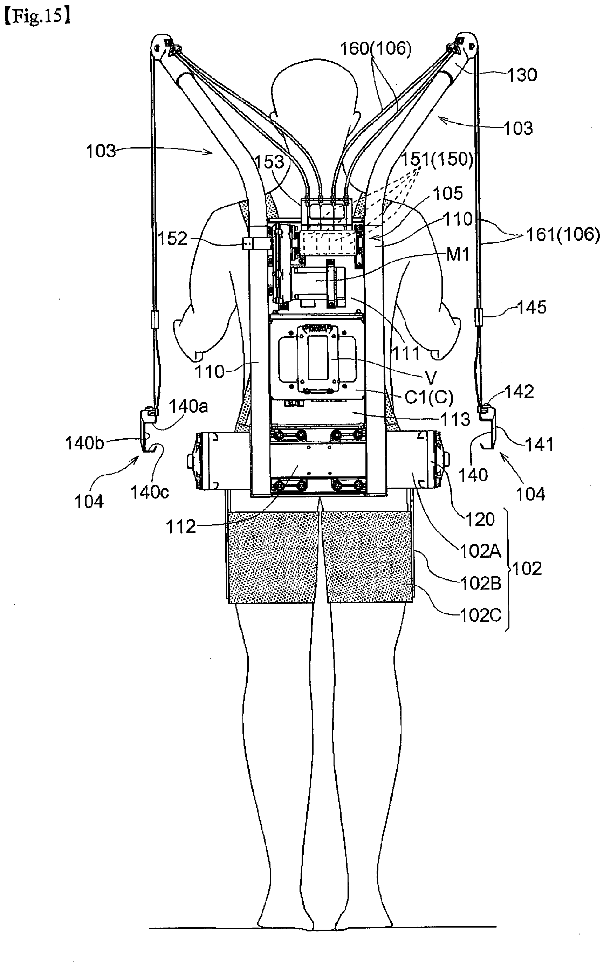

As shown in Figs. 14 and 15, out of the upper and lower horizontal frames 111 and 112, the horizontal frame 111 that is arranged on the upper side is provided with a reel device 150, which serves as a winding winch 105 for raising and lowering the grip operation tools 104, and a first electrical motor M1 that drives the reel device 150.

The reel device 150 and the first electrical motor M1 are arranged such that the rotation axes thereof extend in the horizontal direction, and such that the reel device 150 is located above the first electrical motor M1 and conforms to the flattened surface of the horizontal frames 111. Accordingly, the main body portion 101 can have a low-profile design, and, as shown in Figs. 14 etc., the amount of protrusion rearward from the main body portion 101 can be set as small as possible.

As shown in Figs. 14 to 17, leg portion operation devices 102 are separately attached to the right and left sides of the horizontal frame 112 on the lower side.

These leg portion operation devices 102 are coupled to the main body portion 101 and the thigh portions of the leg portions of the user, and the operation of the leg portion operation devices 102 presses downward the leg portions of the user when they are bent relative to the upper body. Accordingly, in this configuration, the standing-up movement of the user is assisted with the leg portions serving as reaction receiving points.

An intermediate attachment plate 113 is fixed spanning the right and left vertical frames 110 at an intermediate position between the upper horizontal frame 111 and the lower horizontal frame 112.

The control device C and the battery V are attached to the intermediate attachment plate 113; the control device C controls operations of the first electrical motor M1 provided for the winding winch 105 and second electrical motors M2 provided for the leg portion operation devices 102, and the battery V supplies power to the first electrical motor M1 and the second electrical motors M2. Specifically, the control device C is fixed to the intermediate attachment plate 113, and the battery V is fixed to the rear face side of a cover case C1 of the control device C.

As described above, in the main body portion 101, the reel device 150 of the winding winch 105 is arranged above the first electrical motor M1 of the winding winch 105, the control device C, and the battery V, and therefore the length of the path of operation wires 106 extending to the grip operation tools 104 can be shortened, and the total amount of the wires can be reduced.

Also, the control device C, which is the hub of this assistance suit, is guarded from above by the winding winch 105 and from below by the battery V, thus facilitating avoiding damage from collisions with other objects, and facilitating maintaining normal device control.

The battery V is used as a power supply for the first electrical motor M1 of the winding winch 105, the control device C, the pair of right and left second electrical motors M2 of the leg portion operation devices 102 (see Fig. 17), various sensors (not shown), etc.

The control device C is configured to receive signals from operation switches 142 of the later-described grip operation tools 104 and various sensors, and control the driving of corresponding devices.

### Leg portion operation device

The pair of right and left leg portion operation devices 102 are configured as described below.

As show in Figs. 14 to 17, the leg portion operation devices 102 each include a waist portion frame 102A that is L-shaped in a top view, a swingable arm portion 102B that is supported to a front end portion of the waist portion frame 102A so as to be capable of swinging in the front-back direction about a horizontal axis xl, and an abutting portion 102C that is provided in a leading end portion of the swingable arm portion 102B and is capable of abutting against the thigh portion of the user.

The leg portion operation devices 102 each have an adjustable position configuration in which the positions of attachment to the horizontal frame 112 can be adjusted in the right-left direction such that the space between the right and left waist portion frames 102A can be adjusted to appropriately arrange the right and left leg portion operation devices 102 to suit the user's waist width and leg spacing, for example.

In the L shape of the waist portion frame 102A of each of the leg portion operation devices 102, the base-side portion that comes into contact with the lower horizontal frame 112 along the right-left direction is coupled to the horizontal frame 112 using bolts, and the leading-side portion that projects forward includes a gear box 120 for driving the swingable arm portion 102B to swing about the horizontal axis x1. As shown in Fig. 17, the second electrical motor M2 for driving the swingable arm portion 102B is coupled at a position behind the gear box 120. Rotation force from the second electrical motor M2 passes through the gear box 120 and is converted into rotation force about the horizontal axis x1, and is transmitted to the swingable arm portion 102B in a reduced-speed state.

The driving of the leg portion operation devices 102 is performed based on detection signals obtained by sensors such as a potentiometer (not shown) that detects the relative orientation of the swingable arm portion 102B about the horizontal axis x1 relative to the waist portion frame 102A, and a potentiometer 152 that detects the rotation angle of the reel device 150, and operation signals from the operation switches 142 of the later-described grip operation tools 104. For this reason, the control device C can detect operation signals indicating operation of the operation switches 142 provided in the grip operation tools 104, detection signals indicating the relative orientations of the swingable arm portions 102B about the horizontal axis x1 relative to the waist portion frames 102A, and detection signals indicating the rotation angle of the reel device 150.

While the operation switches 142 provided in the grip operation tools 104 are not being operated, regardless of the relative orientations of the swingable arm portions 102B about the horizontal axis x1 relative to the waist portion frame 102A, an assist operation with respect to the leg portion operation devices 102 is not performed.

The assist operation with respect to the leg portion operation devices 102 is performed if the control device C detects operation signals indicating that the operation switches 142 of the grip operation tools 104 have been operated for lifting, and detection signals indicating that the relative orientations of the swingable arm portions 102B about the horizontal axis x1 relative to the waist portion frame 102A correspond to a lowered-waist squatting orientation of the user at the time when the switches are operated.

In other words, even if the operation switches 142 are operated for lifting, a winding operation is not performed by the reel device 150, and priority is given to changing the relative orientations of the swingable arm portions 102B about the horizontal axis x1 relative to the waist portion frame 102A so as to press the swingable arm portions 102B downward about the horizontal axis x1 relative to the waist portion frame 102A so as to assist the user's movement from the squatting orientation to a standing-up orientation. If it is detected that the relative orientations of the swingable arm portions 102B about the horizontal axis x1 relative to the waist portion frame 102A correspond to the standing-up orientation of the user, the reel device 150 winds the operation wires 106 (corresponding to "cord elements"), thus assisting the operation of lifting the load upward from the standing-up orientation.

The reel device 150 unwinds the operation wires 106 if the control device C detects operation signals indicating that the operation switches 142 of the grip operation tools 104 have been operated for lowering, and detection signals indicating that the relative orientations of the swingable arm portions 102B about the horizontal axis x1 relative to the waist portion frame 102A correspond to the standing-up orientation of the user at the time when the switches are operated. In this unwinding, the unwinding limit of the reel device 150 is set such that the unwinding is performed slowly while braking the operation wires 106, and such that the user can extend their arms while holding the grip operation tools 104.

If the operation switches 142 are operated for lowering even after the unwinding of the operation wires 106 by the reel device 150 has reached the limit, the relative orientations of the swingable arm portions 102B about the horizontal axis x1 relative to the waist portion frame 102A are changed so as to permit the user to move from the standing-up orientation to the squatting orientation. In this change in orientation, the swingable arm portions 102B are gradually moved in a direction opposite to the pressing-down direction about the horizontal axis x1 relative to the waist portion frame 102A, thus assisting the movement of the user for changing orientation so as to permit the user to move to the squatting orientation.

If the operations performed on the operation switches 142 of the grip operation tools 104 for lifting or lowering are canceled, or the operation switches are operated for both lifting and lowering at the same time, the winding or unwinding of the operation wires 106 by the reel device 150 is stopped, and the assist operation with respect to the leg portion operation devices 102 is canceled.

### Lifting arms

The lifting arms 103 that extend forward from the upper portion of the main body portion 101 are configured as described below.

The lifting arms 103 are constituted by metal pipes that are integral with the vertical frames 110, the metal pipes that constitute the pair of right and left vertical frames 110 being bent forward on the upper portion side.

Specifically, in the metal pipes that constitute the vertical frames 110, the ranges that extend in the up-down direction from the waist portion to the shoulder portions of the user and connect the upper and lower horizontal frames 111 and 112 are used as the vertical frames 110, and the portions of the metal pipes that extent diagonally upward and forward from the upper portions of the vertical frames 110 to a position beyond the shoulder portions of the user are used as the lifting arms 103.

Rather than extending to a high position in order to avoid the user's head portion in a side view, these lifting arms 103 extend forward and upward while crossing the region lateral to the user's head portion in a side view. Accordingly, the upper end portions of the lifting arms 103 are set to a relatively low height position so as to not extend greatly beyond the top of the user's head portion.

Also, as shown in Fig. 14, the lifting arms 103 extend forward and upward while passing through a region above an eye line hL of the user when facing horizontally forward. The position of the upper end portions of the lifting arms 103 is set to a position that is likely to be in the user's field of view when facing horizontally forward. Specifically, the vertical angle of view of a person facing horizontally forward is normally said to be approximately 60 degrees upward and approximately 70 degrees downward (see the dashed line range in Fig. 14), and therefore the positions of the upper end portions of the lifting arms 103 are set within this field of view.

As shown in Figs. 15 to 17, the portions of the right and left metal pipes that constitute the vertical frames 110 are arranged substantially parallel to each other, whereas in the portions that constitute the lifting arms 103, the upper end sides of the right and left metal pipes are formed so as to be inclined and spread apart to the right and left while extending forward and upward.

The space between the vertical frames 110 in the right-left direction is set narrower than the shoulder width of the user (e.g., approximately half the shoulder width). Also, the space between the upper end portions of the lifting arms 103 in the right-left direction is set wider than the shoulder width of the user (e.g., approximately two times the shoulder width).

In a top view, the front-rear positions of the upper end portions of the lifting arms 103 are farther forward than the positions of the shoulders of the user, and thus are set to positions forward of the user's face and trunk portion (e.g., near a vertical line at the tip of the user's toes) (see Fig. 14).

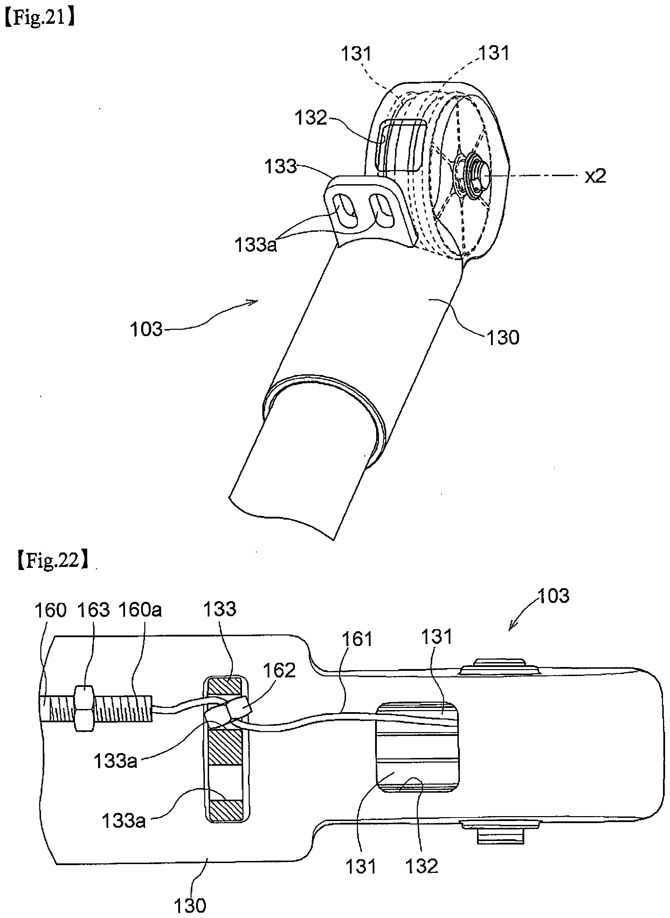

Two pulleys 131 are attached to each of the right and left upper end portions that extend forward from the lifting arms 103 having the above configuration, and these pulleys are attached so as to rotate about the same horizontal axis x2 (see Figs. 21 to 23).

The two operation wires 106, which have one grip operation tool 104 attached to one end side, are hung on the two pulleys 131. Accordingly, a total of four operation wires 106 are hung on a total of four pulleys 131 of the right and left lifting arms 103.

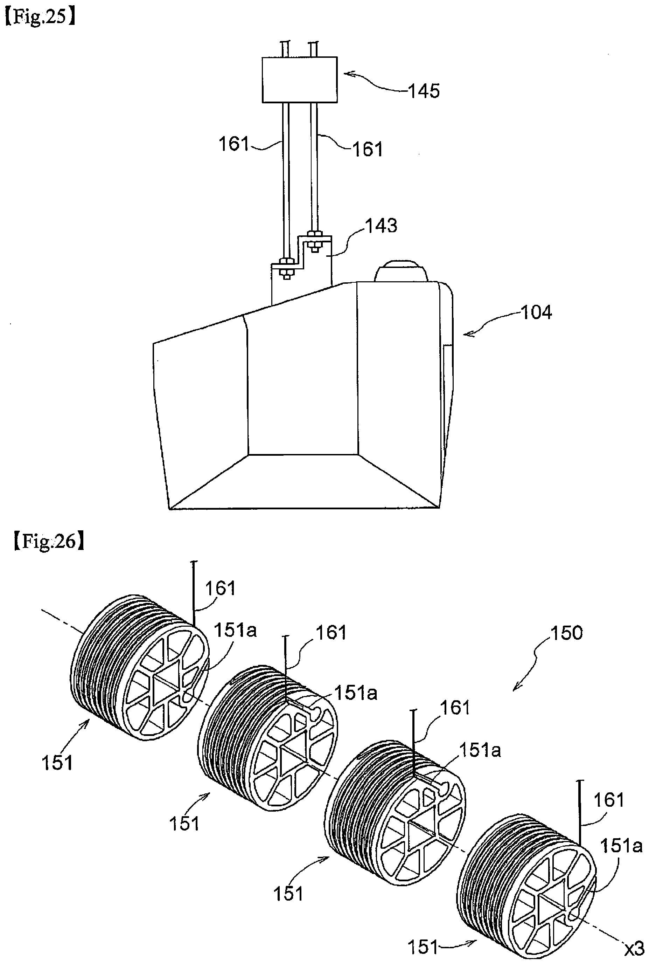

The other end sides of the operation wires 106 are individually locked to four reel drums 151 (see Figs. 15 and 26) provided in the reel device 150, the four reel drums 151 operate at the same time along with a winding or unwinding operation of the reel device 150, and thus the four operation wires 106 are wound or unwound in the same direction at the same time.

End portion covers 130 that cover the upper and lateral sides of the pulleys 131 are attached to the upper end portions of the lifting arms 103. As shown in Fig. 21, an insertion hole 132 for the operation wires 106 and a wire stopper portion 133 are integrally provided in each of the end portion covers 130.

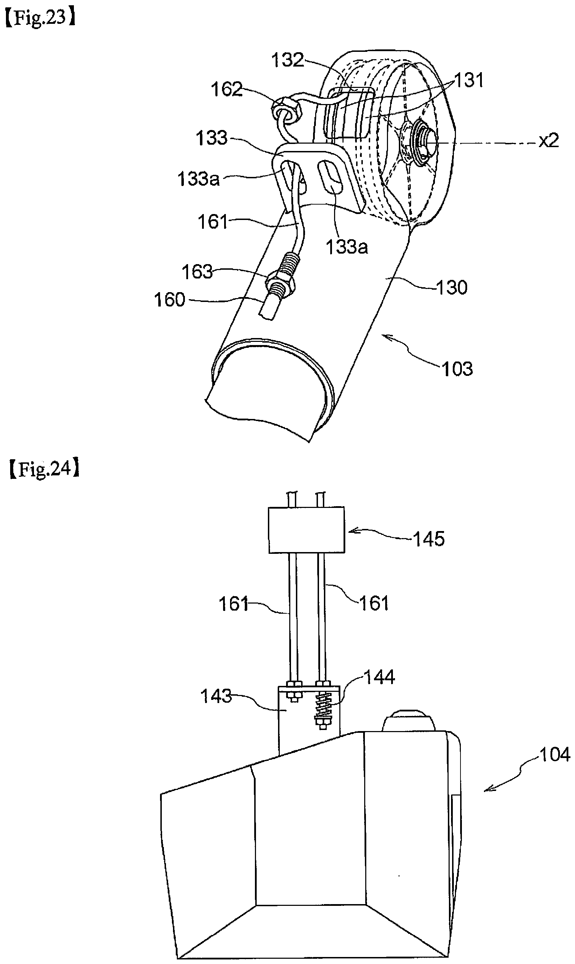

As shown in Figs. 22 and 23, the operation wires 106 are each constituted by a Bowden cable that includes an outer wire 160 and an inner wire 161. In these Bowden cables, the inner wires 161 are coupled to the grip operation tools 104 and the reel device 150, and the outer wires 160 protect and guide the inner wires 161. Ends on one side of the outer wires 160 are fixed to the wire stopper portion 133 at a position near the upper end portion of the lifting arm 103, and ends on the other side are fixed to a back portion wire stopper 153 at a position near the reel device 150.

As shown in Figs. 22 and 23, the insertion hole 132 for insertion of two inner wires 161 is formed in the upward-facing face of the end portion cover 130, and the wire stopper portion 133 for fixing two outer wires 160 is provided in the vicinity of the insertion hole 132.

The wire stopper portion 133 is provided with two elongated holes 133a that are elongated in the up-down direction. These elongated holes 133a have a short-axis dimension that is large enough for insertion of the inner wires 161 and threaded portions 160a of the outer wires 160, and is shorter than the outer diameter of coupling nuts 162 (corresponding to "screwing member"), and the long-axis dimension is larger than the outer diameter of the coupling nuts 162.

Accordingly, when the coupling nut 162 is removed from the threaded portion 160a of the outer wire 160 and placed around the inner wire 161, it can be passed through the elongated hole 133a as shown in Fig. 23 while in a diagonal orientation in a top view as shown in Fig. 22. To enable this, the short-axis dimension of the elongated hole 133a needs to be larger than the thickness-direction dimension of the coupling nut 162, and needs to allow the passage of the coupling nut 162 in the inclined orientation, in which the inner wire 161 is temporarily bent.

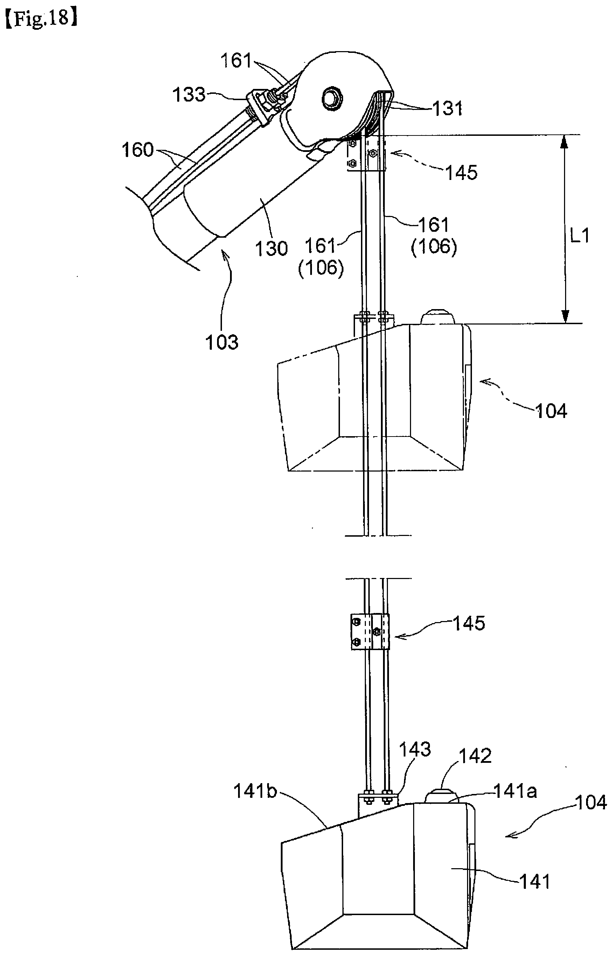

The threaded portions 160a of the outer wires 160 are respectively inserted into the elongated holes 133a and 133a of the wire stopper portion 133 having the above configuration. The coupling nuts 162 are then screwed onto the end portion sides of the threaded portions 160a, and the wire stopper portion 133 is sandwiched between the coupling nuts 162 and fastening nuts 163 from the front and rear in the length direction of the operation wires 106, thus fixing the two outer wires 160 to the wire stopper portion 133 (see Figs. 17 and 18).

These coupling nuts 162, fastening nuts 163, and threaded portions 160a of the outer wires 160 constitute a fixing tool that fixes the outer wires 160 to the wire stopper portion 133.

### Grip operation tool

Out of the four operation wires 106 hung on the right and left lifting arms 103, the end portions of the two operation wires 106 hung on each of the lifting arms 103 are attached to one grip operation tool 104.

The two operation wires 106 each have a strength capable of independently withstanding a preset load that is the allowable lifting load. There are cases where one of the operation wires 106 may break during use over an extended period, and the above configuration is for, even in such a case, making it possible for the one remaining operation wire 106 to maintain a load corresponding to the allowable lifting load in the suspended state.

Specifically, the lower end portions of the two inner wires 161 suspended from each of the lifting arms 103 are attached to one grip operation tool 104, and one of the two inner wires 161 is formed slightly longer than the other inner wire 161.

Specifically, out of the four reel drums 151 provided in the reel device 150, the inner wire 161 that is coupled to the reel drum 151 located one spot inward from the reel drum 151 located on the outer side in the right-left direction is formed slightly longer than the inner wire 161 that is coupled to the reel drum 151 on the outer side. It is desirable that the difference between the lengths of these two inner wires 161 is approximately the same as or larger than the amount of stretch that is predicted to occur in the shorter inner wire 161 over time due to the load of loads during normal use.

The lower end portions of the two inner wires 161 are coupled and fixed to an attachment bracket 143 that is provided on the upper face side of the grip operation tool 104.

In this way, by coupling the grip operation tool 104 to the lifting arm 103 in the state where the two inner wires 161 have a length difference, the longer one of the two inner wires 161 is affected almost not at all by the load of the lifted load, and the load is concentrated on the shorter one. Accordingly, although the two inner wires 161 are provided, one of the inner wires 161 is used as a normally-used inner wire 161, and the other inner wire 161 is used as an auxiliary means for maintaining the load in the suspended state even if the normally-used inner wire 161 breaks.

In this way, in the case where the load of the suspended load acts on only one of the inner wires 161, and the load of the suspended load does not act on the other inner wire 161, the load sharing percentage for the weight of the lifting target load is 100% for the former and 0% for the latter.

As shown in Figs. 14 to 17, the right and left grip operation tools 104 have right-left symmetrical shapes, and have a configuration in which a grip portion 141 made of a synthetic resin is integrally attached to the outer face of a hook portion 140 that is made of a metal.

The hook portions 140 are each formed with a channel shape by bending a metallic plate member, and include a flat plate-shaped upper portion 140a, a flat plate-shaped lateral portion 140b that is vertically oriented and extends downward from an outward portion of the upper portion 140a, and a flat plate-shaped lower portion 140c that extends inward from a lower portion of the lateral portion 140b.

The grip portion 141 is made of a synthetic resin, and is configured including a front upper face portion 141a shaped as a horizontal surface, and a rear upper face portion 141b (see Fig. 14) shaped as an inclined surface that extends diagonally rearward and downward from the front upper face portion 141a. A push-button type of operation switch 142 for a lifting operation (or lowering operation) is provided in the front upper face portion 141a of the grip portion 141.

In the assistance suit of this embodiment, the operation switch 142 of the right grip portion 141 is configured for a lifting operation, and the operation switch 142 of the left grip portion 141 is configured for a lowering operation.

Note that the operation switches 142 are electrically connected to the control device C by cables that are not shown in the drawings, and thus operation signals for the operation switches 142 can be transmitted.

By hooking a lower portion 140c of the hook portion 140 to a load for example, and then operating the operation switch 142, it is possible to lift (or lower) the load.

### Stopper

Stoppers 145 that maintain a closest distance L1 from the grip operation tool 104 to the corresponding lifting arm 103 in a predetermined range are provided between the right and left lifting arms 103 and the right and left grip operation tools 104.

As shown in Figs. 14 and 18, the stoppers 145 are each coupled and fixed to the shorter one of the two inner wires 161 between the lifting arm 103 and the grip operation tool 104, which is the inner wire on which the load load acts in the normal usage state.

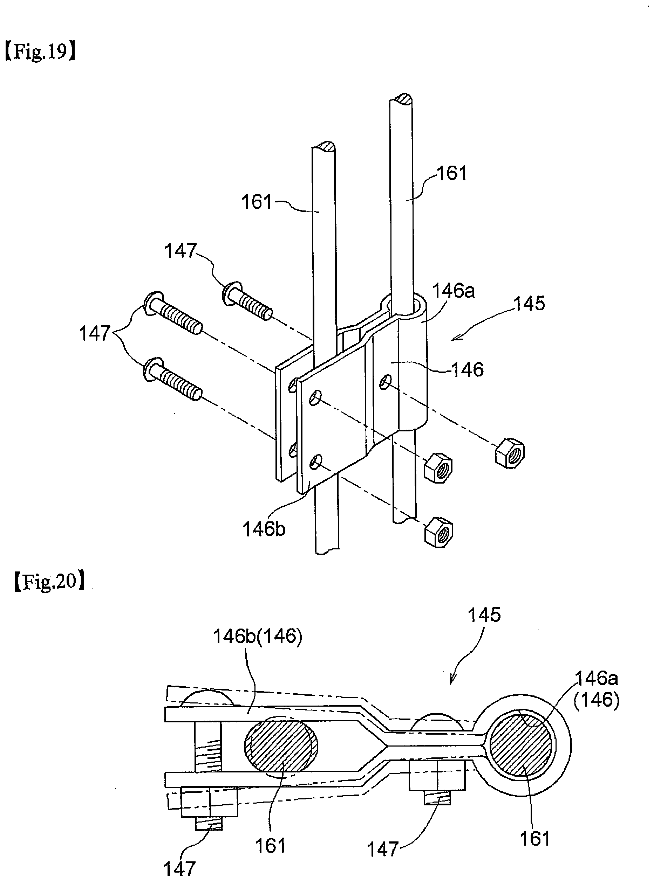

As shown in Figs. 19 and 20, the stopper 145 includes a stop plate 146 that is a metal plate bent into a U shape, and coupling bolts 147 that couple and fix the stop plate 146 to the inner wire 161.

The stop plate 146 includes a tubular portion 146a that is slidably fitted around the inner wire 161 that has a longer length such that the load load does not act thereon in the normal usage state, and abutting plate portions 146b that sandwich and fix the shorter inner wire 161 on which the load load acts in the normal usage state.

Accordingly, in the state where the coupling bolts 147 are fastened, and the shorter inner wire 161 is sandwiched between and fixed by the abutting plate portions 146b, the longer inner wire 161 is in a slidably inserted state, and the load load acts on only the shorter inner wire 161.

When fixed to the shorter inner wire 161 in this way, the stop plate 146 abuts against the upper end portion of the lifting arm 103 before the grip operation tool 104 when the shorter inner wire 161 and the longer inner wire 161 are wound by the winding operation of the winding winch 105. Accordingly, when the stop plate 146 abuts against the upper end portion of the lifting arm 103, a space corresponding to the closest distance L1 exists between the upper end portion of the lifting arm 103 and the upper face portion of the grip operation tool 104 (the front upper face portion 141a and the rear upper face portion 141b) as shown in Figs. 14 and 18, and this position is the upper limit position of the grip operation tool 104.

Accordingly, even if the grip portion 141 of the grip operation tool 104 is gripped, and the operation switch 142 for the lifting operation is continuously operated, a sufficient space exists between the upper end portion of the lifting arm 103 and the upper face portion of the grip operation tool 104 when the grip operation tool 104 arrives at the upper limit position due to the winding operation of the winding winch 105. Therefore, even if some sort of problem occurs, such as a malfunction of the control system, and the winding winch 105 fails to stop and the grip operation tool 104 is wound, it is possible to mechanically prevent the grip operation tool 104 from moving greater than the closest distance L1 and coming abnormally close to the lifting arm 103.

### Belt attachment tool

The belt attachment tool 107 includes a waist belt 170 that is fixed to the lower horizontal frame 112 of the main body portion 101 and can be wrapped around the waist portion of the user, and shoulder belts 171 that are fixed spanning the lower horizontal frame 112 and the upper horizontal frame 111 and are to be hung on the shoulder portions of the user. The assistance suit is worn on the user's back via the waist belt 170 and the shoulder belts 171 (see Figs. 14 to 17).

As shown in Fig. 17, the waist belt 170 is attached to the main body portion 101 via a waist portion frame 102A. The waist belt is configured to be capable of being worn in a state of surrounding the waist portion of the user.

Specifically, the waist belt 170 is configured including a rear surrounding portion 170A that extends from the rear face portion of the waist portion to the right and left side face portions, a left surrounding portion 170B that extends over the entirety of the left face portion of the waist portion, a right surrounding portion 170C that extends over the entirety of the right face portion of the waist portion, and a buckle portion 170D that can attach and detach the front end of the left surrounding portion 170B and the front end of the right surrounding portion 170C, and the length of the belt can be adjusted to suit the user's waist size with use of a belt length adjustment mechanism (not shown) provided in the buckle portion 170D.

Also, pads 173 capable of abutting against waist portions are integrally provided in inner peripheral portions of the waist belt 170 (the rear surrounding portion 170A, the left surrounding portion 170B, and the right surrounding portion 170C).

Buckle-type belt length adjustment mechanisms 174 (one example of a "position changing mechanism") that enable adjusting the belt length are respectively provided in a coupling portion between the rear surrounding portion 170A and the left surrounding portion 170B and a coupling portion between the rear surrounding portion 170A and the right surrounding portion 170C.

By providing these belt length adjustment mechanisms 174, it is possible for the pads 173 provided in the left surrounding portion 170B and the right surrounding portion 170C to be adjusted to optimum positions on the user's flank portions so as to fit the physique of the user who will wear the assistance suit.

As shown in Fig. 14, the shoulder belts 171 are respectively provided on the right and left sides, with the upper end portions being attached to the upper horizontal frame 111, and the lower end portions being attached to the rear surrounding portion 170A of the waist belt 170.

Due to the waist belt 170 and the shoulder belts 171, the assistance suit can be stably worn on the back portion of the user.

The weight of the assistance suit and the load mainly acts on the waist portion of the user via the waist belt 170, and is stably supported by the waist portion.

Also, the shoulder belts 171 exhibit a function of mainly preventing the state where the main body portion 101 becomes separated rearward from the back portion of the user.

The following describes other aspects of the second embodiment described above. These other aspects can be appropriately combined as long as no contradiction arises.

(2-1) Although the above embodiment illustrates a structure in which the lower end portions of two inner wires 161 are coupled and fixed to the attachment bracket 143 provided on the upper face side of the grip operation tool 104, there is no limitation to this structure.

For example, a configuration is possible in which, as shown in Fig. 24, the lower end portion of the one inner wire 161 that is slightly longer than the other inner wire 161 is pulled to a tense state with use of a weak biasing spring 144. Accordingly, the slack in the longer inner wire 161 can be eliminated.

In this case, a certain amount of tensile force acts on the slightly longer inner wire 161 as well, but it is very small compared to the weight of a load, and therefore is not likely to cause degradation in the durability of this inner wire 161.

It is sufficient that the other configurations are the same as those in the embodiment described above.

(2-2) Although the above embodiment illustrates a structure in which the lower end portions of two inner wires 161 having different lengths are coupled and fixed to the attachment bracket 143 provided on the upper face side of the grip operation tool 104, there is no limitation to this structure.

For example, a configuration is possible in which, as shown in Fig. 25, a level difference is provided in the attachment bracket 143 provided on the upper face side of the grip operation tool 104, two inner wires 161 having the same length are coupled to this attachment bracket 143 having a level difference, and one inner wire 161 is coupled with more slack than the other inner wire 161.

It is sufficient that the other configurations are the same as those in the embodiment described above.

(2-3) Although the above embodiment illustrates a structure in which one inner wire 161 is coupled with more slack than the other inner wire 161 at the coupling location between the lower end portions of the two inner wires 161 and the grip operation tool 104, there is no limitation to this structure.

For example, a structure is possible in which, as shown in Fig. 26, one inner wire 161 is coupled with more slack than the other inner wire 161 with use of the coupling structure between the reel drums 151 of the reel device 150 and the end portions on the base end side of the two inner wires 161.

Specifically, in the reel device 150, the four reel drums 151 are driven to rotate while being supported on one square shaft (not shown), and the tension state of the two inner wires 161 coupled to one grip operation tool 104 may be changed by setting different phases for the reel drums 151.

In this structure, the reel drums 151 are attached to the square shaft such that the positions of coupling grooves 151a of the reel drums 151 are approximately 90 degrees different between the reel drum 151 at the outermost position in the direction along a rotation axis x3 and the reel drum 151 located on the inward side thereof. Accordingly, the base end of the inner wire 161 coupled to the reel drum 151 at the outermost position is farther from the upper end portion of the lifting arm 103 than the base end of the inner wire 161 coupled to the reel drum 151 located on the inward side is, and the inner wire coupled to the outermost reel drum is the inner wire 161 that is normally used. Also, the inner wire 161 coupled to the reel drum 151 located on the inward side is in a slightly slack coupling state, and this inner wire serves as the auxiliary inner wire 161.

It is sufficient that the other configurations are the same as those in the embodiment described above.

(2-4) Although the above embodiment illustrates a structure in which the load sharing percentage of the two inner wires 161 is approximately 100% for one inner wire 161 and approximately 0% for the other inner wire 161, there is no limitation to this structure.

For example, a configuration is possible in which the biasing spring 144 shown in Fig. 24 is a stronger spring, and the weight of the load that acts on the grip operation tool 104 is distributed to the other slightly longer inner wire 161 as well. Accordingly, the load sharing percentage of the one inner wire 161 can be set lower than 100%, and the load sharing percentage of the other inner wire 161 can be set higher than 0%.

Also, there is no limitation to a structure employing two inner wires 161 that have different load sharing percentages in this way, and the load sharing percentages may be set the same. Specifically, even if the load sharing percentages are the same, there is a very low possibility that the two inner wires 161 will break at the exact same time, and even if one breaks, the assistance suit can continue to be used by replacing the broken inner wire 161.

It is sufficient that the other configurations are the same as those in the embodiment described above.

(2-5) Although the above embodiment illustrates a structure in which two operation wires 106 are provided for one grip operation tool 104, there is no limitation to this structure. For example, a structure using three or more operation wires 106 may be employed. Also, there is no limitation to the operation wires 106, and belt-shaped bodies or the like may be used.

It is sufficient that the other configurations are the same as those in the embodiment described above.

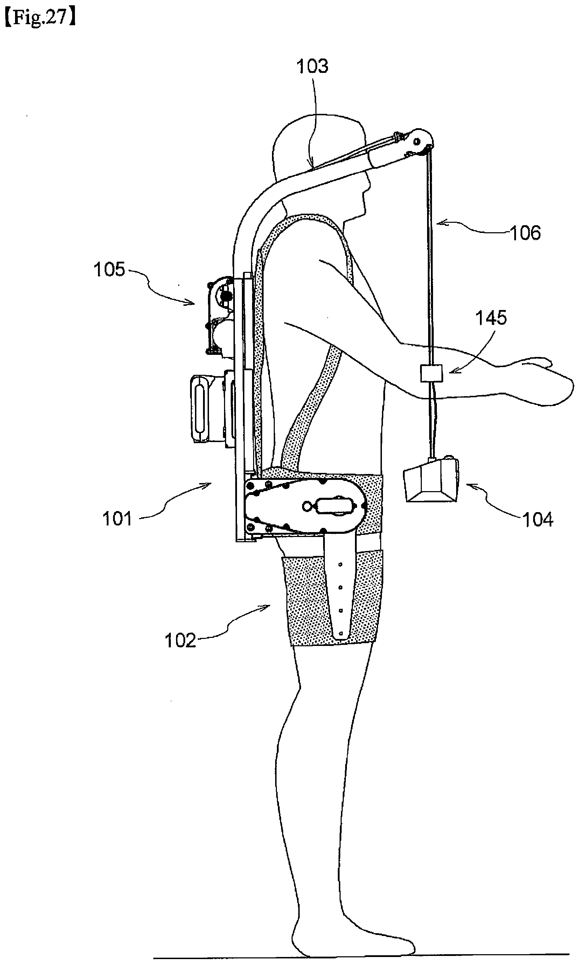

(2-6) Although the above embodiment illustrates a structure in which the upper end portions of the lifting arms 103 are located slightly higher than the top of the head of the user, there is no limitation to this structure, and the upper end portions of the lifting arms 103 may be lower than the top of the head of the user as shown in Fig. 27 for example.

Alternatively, although not shown, configurations are possible in which the positions of the upper end portions of the lifting arms 103 can be changed with use of configurations in which, for example, the angles of the upper end portion regions of the lifting arms 103 can be changed, or it is possible to replace the lifting arms 103 with arms that have a different angle of extension from the main body portion 101.

It is sufficient that the other configurations are the same as those in the embodiment described above.

(2-7) Although the above embodiment illustrates a structure in which the belt attachment tool 107 is provided with both the waist belt 170 and the shoulder belts 171, there is no limitation to this structure.

For example, a configuration is possible in which the belt attachment tool 107 includes only the shoulder belts 171 or only the waist belt 170. In this case, if only the waist belt 170 is provided, it is desirable that a fixed shoulder hanging portion or the like is formed on the main body portion 101 instead of the shoulder belts 171.

It is sufficient that the other configurations are the same as those in the embodiment described above.

(2-8) Although the above embodiment illustrates a structure in which the main body portion 101 is provided with both the winding winch 105 and the leg portion operation device 102, a structure is possible in which the leg portion operation device 102 is not provided, and only the winding winch 105 is provided.

It is sufficient that the other configurations are the same as those in the embodiment described above.

(2-9) Although the above embodiment illustrates a structure in which the lower end portions of two inner wires 161 are coupled and fixed to the attachment bracket 143 provided on the upper face side of the grip operation tool 104, there is no limitation to this structure.

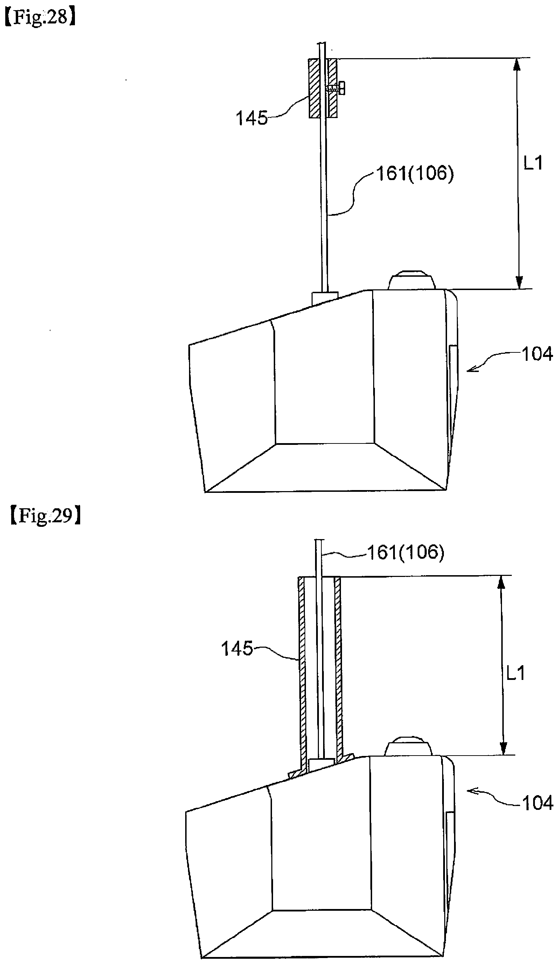

For example, a configuration is possible in which, as shown in Fig. 28, the cord element is one operation wire 106, and a short tube-shaped stopper 145 is attached to the one inner wire 161 at a position separated a predetermined distance from the upper face of the grip operation tool 104.

It is sufficient that the other configurations are the same as those in the embodiment described above.

(2-10) Although the above embodiment illustrates a structure in which the stopper 145 is attached to the inner wire 161 at a position separated a predetermined distance from the upper face of the grip operation tool 104, there is no limitation to this structure.

For example, as shown in Fig. 29, a long tube-shaped stopper 145 may be provided upright on the upper face side of the grip operation tool 104. If the stopper 145 itself has a long tube shape in this way, a predetermined distance (the closest distance L1) can be maintained between the upper end portion of the lifting arm 103 and the upper face of the grip operation tool 104 on the upper face side of the grip operation tool 104. It is sufficient that the other configurations are the same as those in the embodiment described above.

(2-11) Although the above embodiment illustrates a structure in which the stopper 145 is fixed to an inner wire 161 or the grip operation tool 104, there is no limitation to this structure.

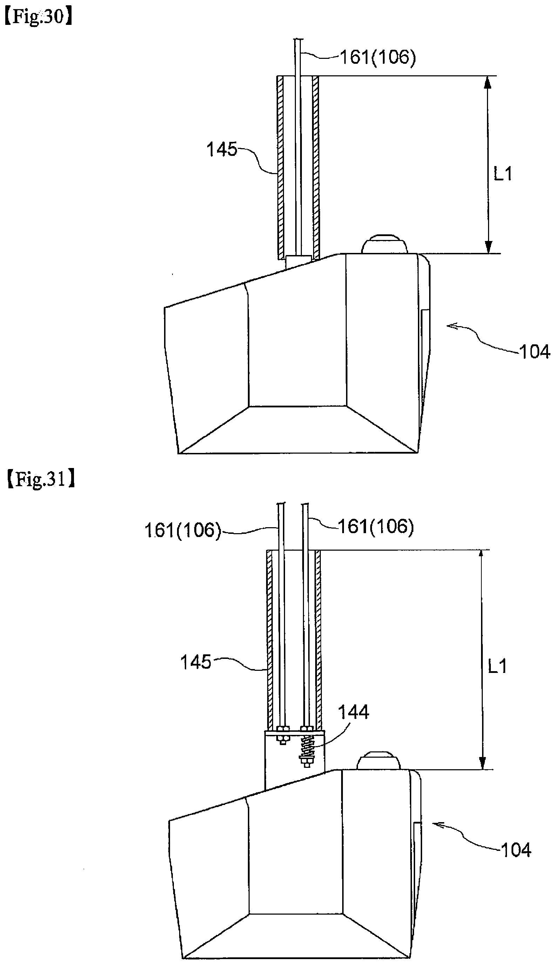

For example, a structure is possible in which, as shown in Fig. 30, a stopper 145 having a tubular shape is not fixed to either of the inner wire 161 and the grip operation tool 104, but rather is slidably fitted around the inner wire 161. In this structure as well, if the grip operation tool 104 moves to a position that is the predetermined distance (the closest distance L1) from the upper end portion of the lifting arm 103, it abuts against the upper end portion of the lifting arm 103, thus making it possible to mechanically restrict further movement toward the grip operation tool 104.

It is sufficient that the other configurations are the same as those in the embodiment described above.

(2-12) Although the embodiments shown in Figs. 28 to 30 illustrate structures provided with the stopper 145 that acts on one inner wire 161 that is normally used, there is no limitation to this structure.

For example, a configuration is possible in which, as shown in Fig. 31, a tubular stopper 145 is fitted around and surrounds both the inner wire 161 that is normally used and the other inner wire 161 that is used as an auxiliary wire.

In this case, the lower end portion of the one inner wire 161 that is normally used is directly coupled to the grip operation tool 104, and the other auxiliary inner wire 161 is set slightly longer than the one inner wire 161, and the lower end portion is pulled and biased away from the lifting arm 103 with use of the weak biasing spring 144. By providing the tubular stopper 145 so as to be fitted around both of the inner wires 161 in this state, not only in the normal usage state, but also in the case where one inner wire 161 breaks, it is possible to mechanically restrict movement of the grip operation tool 104 toward the lifting arm 103 greater than the predetermined distance (the closest distance L1).

It is sufficient that the other configurations are the same as those in the embodiment described above.

### (3) Third Embodiment

A third embodiment, which is not part of the present invention, will be described below with reference to the drawings.

Note that in the third embodiment, unless particularly described otherwise, the notations "up", "down", "front", "rear", "left", and "right" mean "up", "down", "front", "rear", "left", and "right" in terms of a worker WB who is wearing an assistance suit on their back portion (mid back portion).

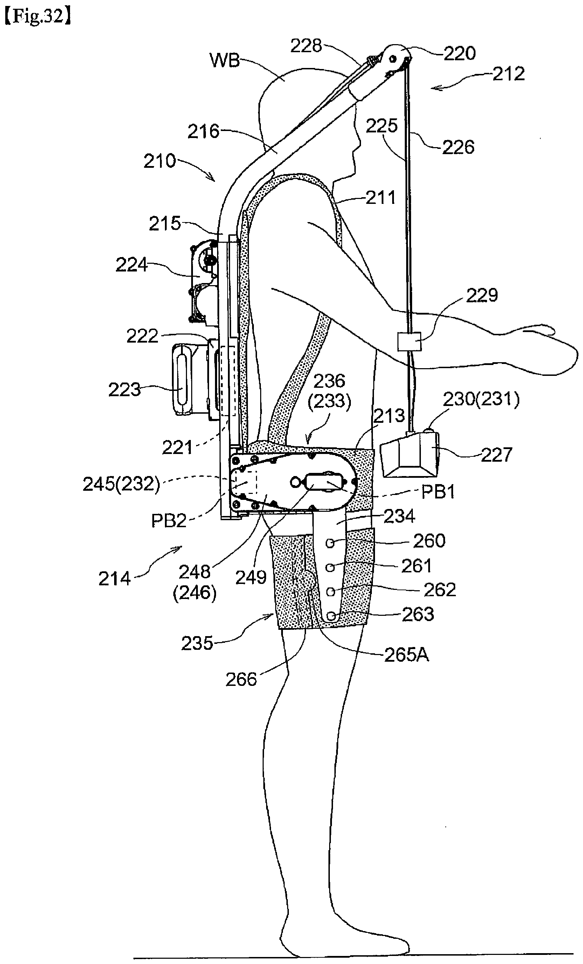

The assistance suit shown in Figs. 32 to 36 etc. includes a main frame 210 that is located on the back portion side of the worker WB, right and left belt-shaped shoulder belts 211 for attachment to the shoulder portions of the worker WB, a load lifting portion 212 that is attached to the main frame 210, belt-shaped waist belts 213 for attachment to the waist portion of the worker WB, and right and left leg action portions 214 that are attached to the main frame 210.

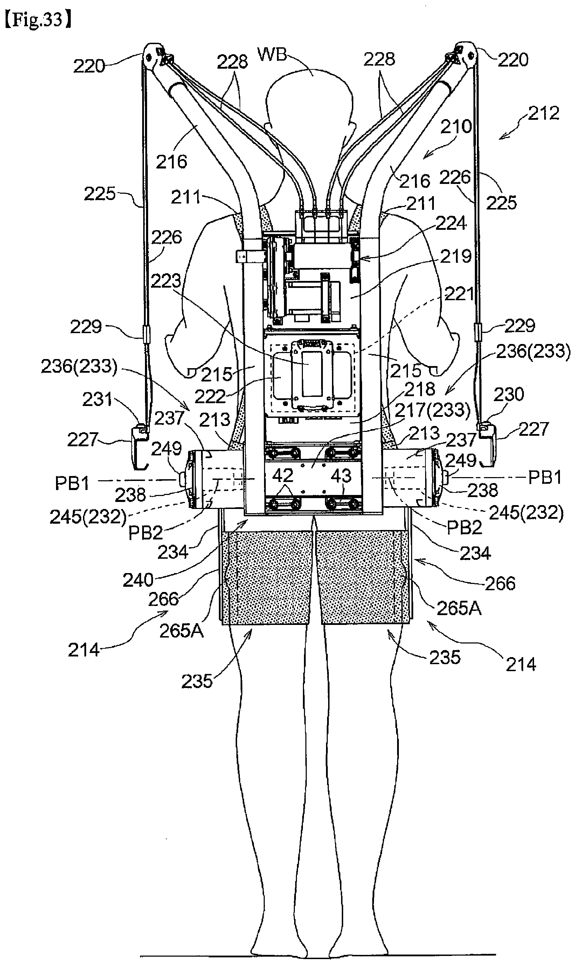

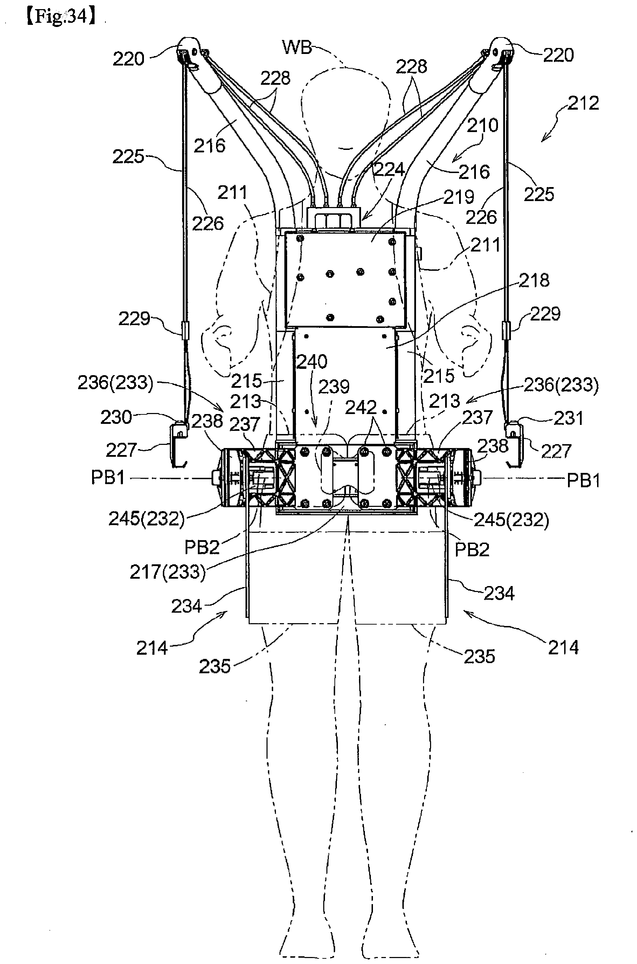

As shown in Figs. 33, 34, etc., the main frame 210 is provided with right and left vertical frames 215 that extend along the vertical direction, extension arm portions 216 that extend from upper end portions of the right and left vertical frames 215 respectively, a lower support plate 217 that supports and couples lower portions of the right and left vertical frames 215 to each other, an intermediate support plate 218 that supports and couples vertically intermediate portions of the right and left vertical frames 215 to each other, an upper support plate 219 that supports and couples upper portions of the right and left vertical frames 215 to each other, etc. Accordingly, the main frame 210 has a framework configuration.

As shown in Figs. 32 to 34 etc., the right and left extension arm portions 216 extend diagonally upward and forward from the upper end portions of the corresponding vertical frames 215, and extend to a position beyond the shoulder portions of the worker WB. The horizontal space between the right and left extension arm portions 216 increases as they extend from the rearward side to the forward side. The vertical frame 215 and the extension arm portion 216 on each of the right and left sides are configured as a single body obtained by bending a single pipe frame. Guide pulleys 220 are rotatably supported to upper end portions of the right and left extension arm portions 216.

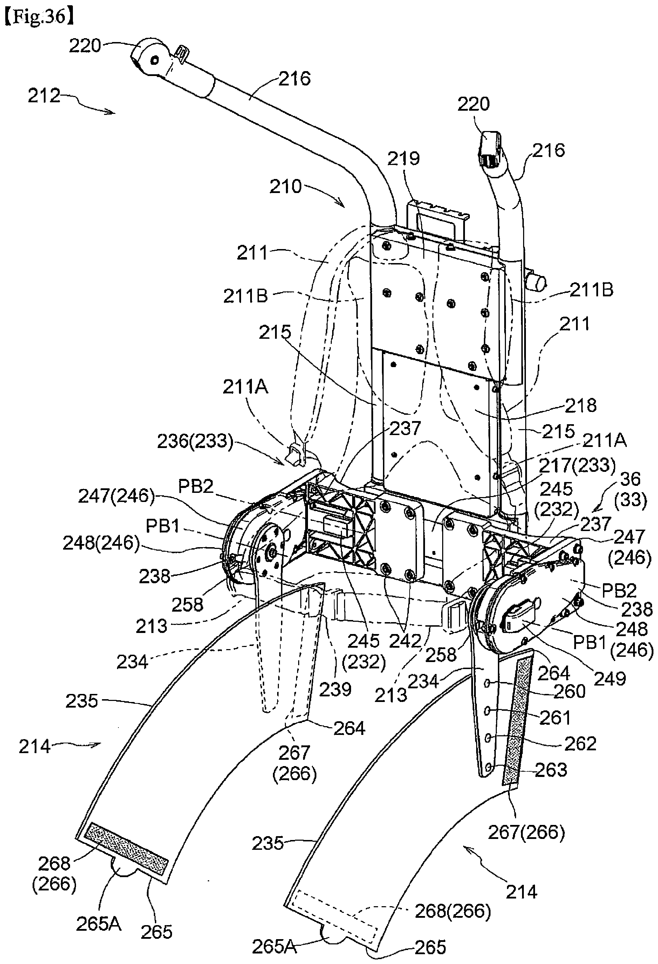

The right and left shoulder belts 211 shown in Figs. 32 to 34, 36, etc. are each attached to the main frame 210. The right and left shoulder belts 211 can be worn on the shoulder portions of the worker WB with an adjustable length due to a first length adjusting mechanism 211A that is constituted by, for example, a buckle mechanism provided with a locking portion and a locked portion. As shown in Fig. 36, a back pad 211B, which is constituted by a cushion member that can abut against the back portion of the worker WB is provided between the main frame 210 and each of the right and left shoulder belts 211.

As shown in Figs. 32, 33, etc., a control device 221 is coupled and supported to a rear face of the intermediate support plate 218. A battery 223 is coupled to a coupling support plate 222 that is coupled to the intermediate support plate 218 so as to cover the rear side of the control device 221. More specifically, the battery 223 is provided on the rear face side of the main frame 210. Also, as shown in Fig. 33, the battery 223 is located on the back face side of the control device 221. In other words, the battery 223 is overlapped with the control device 221 in a rear view.

As shown in Figs. 32 to 35, the load lifting portion 212 includes an actuation device 224 provided with a winch mechanism, right and left main wires 225, right and left backup wires 226, right and left hand portions 227, etc. The backup wires 226 are positioned horizontally inward of the main wires 225, and are in a loosened state. End portions of the right and left main wires 225 on one side and end portions of the right and left backup wires 226 on one side are coupled to the actuation device 224. The actuation device 224 is connected to the control device 221 via a harness (not shown). Due to driving of the actuation device 224, it is possible to wind and unwind the right and left main wires 225 and the right and left backup wires 226.

The left main wire 225 and the left backup wire 226 pass through a tubular outer cable 228, are guided by a left guide pulley 220, and hang down from the left guide pulley 220, and the other end portions of the left main wire 225 and the left backup wire 226 are coupled to the left hand portion 227. The right main wire 225 and the right backup wire 226 pass through a tubular outer cable 228, are guided by a right guide pulley 220, and hang down from the right guide pulley 220, and the other end portions of the right main wire 225 and the right backup wire 226 are coupled to the right hand portion 227.

As shown in Figs. 32 to 34, a left block-shaped locking piece 229 is attached to and spans between the left main wire 225 and the left backup wire 226 at a location between the left guide pulley 220 and the left hand portion 227. A right block-shaped locking piece 229 is attached to and spans between the right main wire 225 and the right backup wire 226 at a location between the right guide pulley 220 and the right hand portion 227.

As shown in Figs. 33, 34, etc., the right and left hand portions 227 are each constituted by a metallic plate member bent to have the cross-sectional shape of a sharp-cornered "C" (hook shape). The right and left hand portions 227 have right-left symmetry with each other.

As shown in Figs. 32 to 34, the right hand portion 227 is provided with a raising operation switch 230, which is a push button type of manual operation portion. The left hand portion 227 is provided with a lowering operation switch 231, which is a push button type of manual operation portion. The raising operation switch 230 and the lowering operation switch 231 are connected to the control device 221 via a harness (not shown).

While wearing the assistance suit, the worker WB holds the right hand portion 227 by gripping it in their right hand, and holds the left hand portion 227 by gripping it with their left hand. The worker WB operates the raising operation switch 230 by pressing it with the thumb on their right hand, and operates the lowering operation switch 231 by pressing it with the thumb on their left hand.

Note that the raising operation switch 230 and the lowering operation switch 231 have a self-resetting configuration. In other words, while the worker WB presses the raising operation switch 230 and the lowering operation switch 231, signals are output from the raising operation switch 230 and the lowering operation switch 231. Also, when the worker WB stops pressing the raising operation switch 230 and the lowering operation switch 231, signals stop being output from the raising operation switch 230 and the lowering operation switch 231.

Furthermore, as shown in Figs. 32 to 41, this assistance suit includes an attachment portion 233 for attachment to the waist portion of the worker WB, right and left swingable arm portions 234 that can transmit assistive power to the thigh portions of the worker WB, driving devices 232 that are driven by the control device 221, and right and left leg belts 235 for attachment to the thigh portions of the worker WB.

### Attachment portion

The lower support plate 217 of the main frame 210 and the right and left waist frames 236 are provided as the attachment portion 233 shown in Figs. 32 to 39. The right and left leg action portions 214 each include a waist frame 236, a swingable arm portion 234, a leg belt 235, etc.

### Waist frame

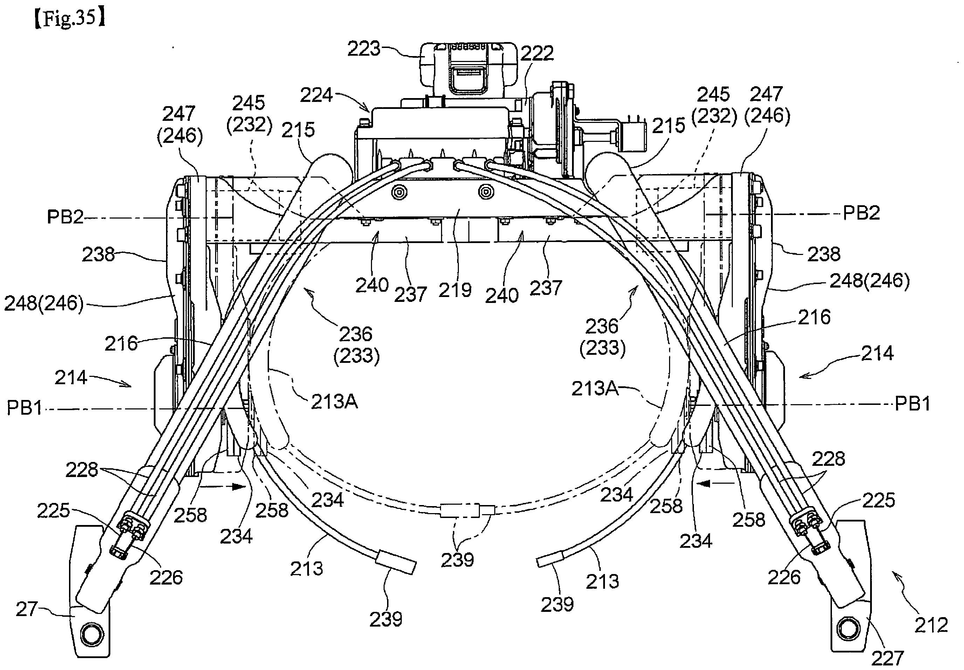

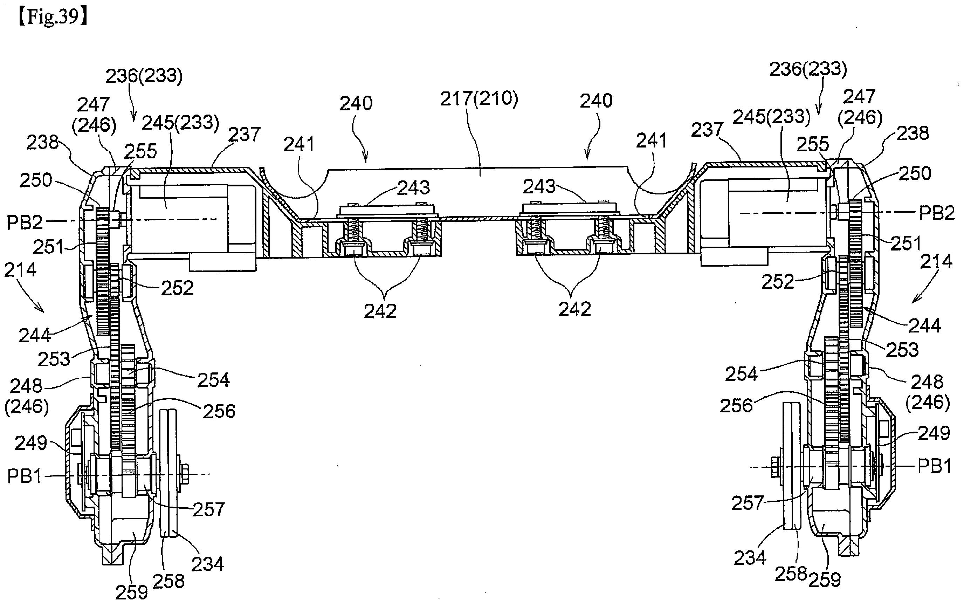

As shown in Figs. 33, 34, and 36 to 39, the right and left waist frames 236 are respectively attached to the horizontally outer sides of the lower support plate 217 of the main frame 210. As shown in Figs. 35 and 39, the waist frames 236 are approximately L-shaped in a top view. The outer shapes of the right and left waist frames 236 have approximate right-left symmetry with each other.

As shown in Figs. 33, 34, and 36 to 39, the waist frames 236 each include a base portion 237 that extends along the right-left direction and is attached and supported to the main frame 210 side, and a driving portion 238 that is coupled to the horizontally outer portion of the base portion 237, extends along the front-back direction, and is for transmitting assistive power. As shown in Figs. 34 and 36 to 39, multiple reinforcing ribs are provided on the base portion 237 in order to ensure strength.

As shown in Figs. 35, 36, etc., the waist belts 213 are respectively attached to the right and left waist frames 236. As shown in Fig. 35, the right and left waist belts 213 are each provided with a waist pad 213A that is constituted by a cushion member that comes into contact with the waist portion of the worker WB. The waist pads 213A are held against the waist belts 213 by insertion of the waist belts 213 through them. The waist belts 213 can be worn by being wrapped around the waist portion of the worker WB with an adjustable length due to a second length adjusting mechanism 239 that is constituted by, for example, a buckle mechanism provided with a locking portion and a locked portion.

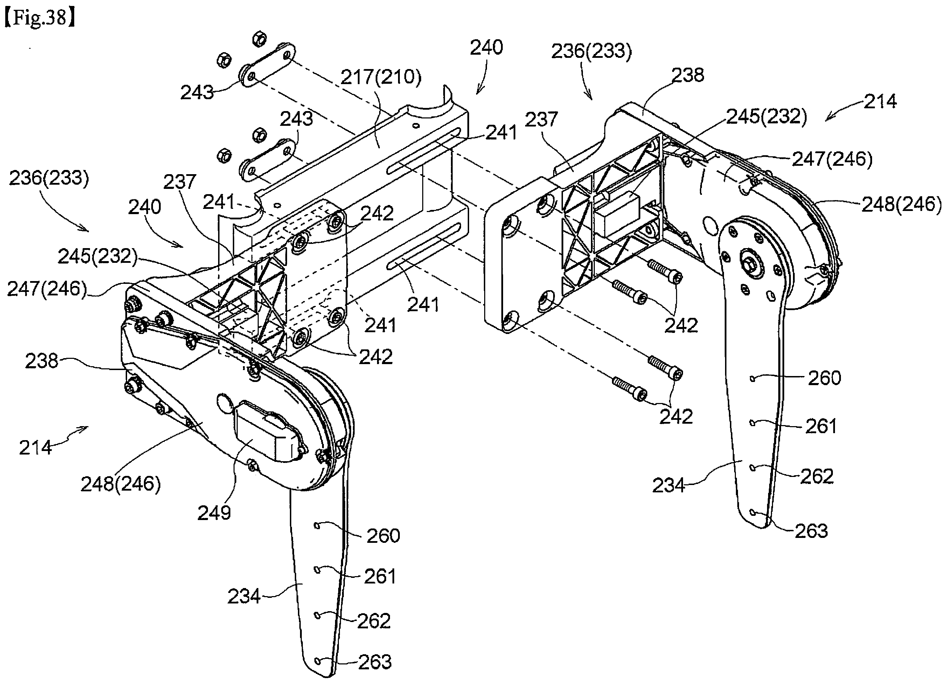

As shown in Figs. 38 etc., first adjustment mechanisms 240 are respectively provided between the lower support plate 217 and the right and left waist frames 236. The right and left first adjustment mechanisms 240 include a pair of upper and lower elongated hole portions 241 that extend along the right-left direction in the lower support plate 217, two upper right and left and two lower right and left (a total of four) fastening tools 242 that are constituted by a combination of bolts and nuts or the like, and a pair of upper and lower plates 243 that extend in the right-left direction and each allow insertion of two right and left fastening tools 242. A recessed portion capable of housing the nuts of two right and left fastening tools 242 is provided in the rear face of each of the plates 243. Insertion holes for insertion of the fastening tools 242 are provided in each of the right and left waist frames 236. In other words, the fastening tools 242 and the plates 243 are configured to move integrally with the base portions 237 of the waist frames 236.

The fastening tools 242 can be fastened and unfastened from the front face side with use of a tool such as a hexagonal wrench. The positions of the right and left waist frames 236 relative to the lower support plate 217 of the main frame 210 can be adjusted by loosening the fastening tools 242, sliding the base portions 237 in the right-left direction in the elongated hole portions 241, and then tightening the fastening tools 242 at predetermined locations. In this way, the right-left width between the right and left leg action portions 214 can be easily adjusted by adjusting the positions of the right and left waist frames 236 relative to the main frame 210.

### Swingable arm portion

The right and left swingable arm portions 234 shown in Figs. 32 to 39 are each constituted by a plate member that is made of a rigid member. The right and left swingable arm portions 234 are respectively attached to the waist frames 236 of the attachment portion 233 so as to be capable of swinging about a swing axis PB1 that extends along the right-left direction.

The swingable arm portions 234 are configured to be capable of transmitting assistive power to the thigh portions of the worker WB. The swingable arm portions 234 are attached to the front portion sides of the waist frames 236 so as to be capable of swinging about the swing axis PB 1 that extends along the right-left direction.

### Driving device

As shown in Figs. 33 to 39, the right and left driving devices 232 are provided in the corresponding waist frames 236, and are configured to be capable of driving the swingable arm portions 234 to swing. The right and left driving devices 232 each include a gear mechanism 244 and an electrically-operated drive motor 245. The gear mechanisms 244 are located on the horizontally outer sides of the worker WB when wearing the assistance suit. The drive motors 245 are located on the rearward side of the waist portion of the worker WB when wearing the assistance suit.

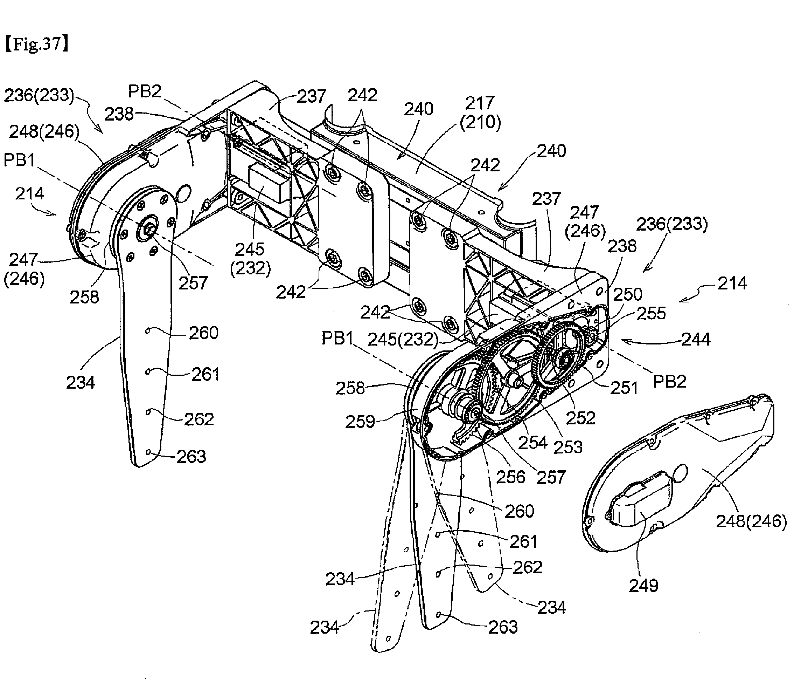

As shown in Figs. 37 and 39, the gear mechanisms 244 are each provided on the corresponding waist frame 236. The gear mechanism 244 is coupled to the drive motor 245 and the swingable arm portion 234. The driving portion 238 of the waist frame 236 is provided with a gear case 246 that houses the gear mechanism 244. The gear case 246 includes a main body case portion 247 that is coupled to the base portion 237, and a cover portion 248 that is removably attached to the main body case portion 247 with use of bolts or the like. The gear mechanism 244 is located between the main body case portion 247 and the cover portion 248.

As shown in Figs. 32 to 39 etc., an angle detection device 249, which is constituted by a rotary encoder and can detect the rotation angle of a drive shaft 257 to which the swingable arm portion 234 is fixed and attached (can detect the swing angle of the swingable arm portion 234), is provided on a lateral portion of the cover portion 248. The angle detection device 249 is connected to the control device 221 via a harness (not shown).

As shown in Figs. 37 and 39, the gear mechanism 244 includes multiple gears that are flat gears. Specifically, in order from the transmission upstream side to the transmission downstream side, the gears include a first gear 250 fixed to an output shaft 255 of the drive motor 245, a second gear 251 meshed with the first gear 250, a third gear 252 that is integrated with the second gear 251 and has a smaller diameter than the second gear 251, a fourth gear 253 that is meshed with the third gear 252, a fifth gear 254 that is integrated with the fourth gear 253 and has a smaller diameter than the fourth gear 253, and a fan-shaped gear 256 that is meshed with the fifth gear 254. A drive shaft 257 is integrally attached to the center of the fan-shaped gear 256, and the swingable arm portion 234 is attached to the drive shaft 257 via a rotation flange 258 so as to be capable of swinging integrally. The rotation axis of the drive shaft 257 is the swing axis PB1 of the swingable arm portion 234.

As shown in Figs. 39 etc., the direction of the transmission of motive power by these gears is substantially the front-rear direction. Because a drive axis PB2 of the output shaft 255 of the drive motor 245 extends along the right-left direction, there is no need for a bevel gear mechanism between the drive motor 245 and the gear mechanism 244, and the structure can be simplified, and it is furthermore possible to avoid a problem such as noise produced by the bevel gear mechanism.

As shown in Figs. 37 and 39, in the gear mechanism 244, the gear located most downstream in the transmission direction is constituted by the fan-shaped gear 256 that is substantially half moon-shaped. A stopper body 259 capable of abutting against the two end portions of the fan-shaped gear 256 is provided in the gear case 246. The swing angle of the swingable arm portion 234 can be restricted by the stopper body 259.

### Drive motor

The drive motors 245 shown in Figs. 32 to 39 apply drive power to the gear mechanisms 244. Electrical power for driving the drive motor 245 is supplied from the battery 223. The drive motors 245 are arranged such that the drive axis PB2 of the drive motors 245 extends along the right-left direction. The drive motors 245 are arranged so as to not project rearward from the battery 223. The drive motors 245 are provided on the rear portion sides of the waist frames 236. The drive motors 245 are arranged forward of the rear end portions of the gear cases 246. The drive motors 245 are housed inside the base portions 237 of the waist frames 236.

### Specific structure of leg belt

The leg belts 235 shown in Figs. 32 to 34 and 36 are shaped as a wide belt. The leg belts 235 are constituted by a resin member that has flexibility and elasticity. Specifically, the leg belts 235 are made of polypropylene. The leg belts 235 are attached to horizontally inner sides of the swingable arm portions 234. The width of each of the leg belts 235 is longer than 112 the longitudinal length of the swingable arm portion 234. Note that the longitudinal direction of the swingable arm portion 234 is the direction that connects the swinging base end portion in the vicinity of the swing axis PB1 to the free end portion located on the side opposite to the swinging base end portion.

As shown in Figs. 32 and 36 to 38, each of the leg belts 235 is fixed to the corresponding swingable arm portion 234 at at least two locations, namely a first fixing portion 260 that is on one end side in the width direction of the leg belt 235 and is on the side toward the swing axis PB1 of the swingable arm portion 234, and a second fixing portion 261 that is on the other end side in the width direction of the leg belt 235, which is on the side opposite to the one end side in the width direction of the leg belt 235.

Also, as shown in Figs. 32 and 36 to 38, the leg belt 235 is fixed to the swingable arm portion 234 also at a third fixing portion 262 and a fourth fixing portion 263 that are located between the first fixing portion 260 toward the one end portion side in the width direction of the leg belt 235 and the second fixing portion 261 toward the other end portion side in the width direction of the leg belt 235.

The leg belt 235 is fixed to the swingable arm portion 234 at the first fixing portion 260, the second fixing portion 261, the third fixing portion 262, and the fourth fixing portion 263 with use of fastening members such as screws.

As shown in Figs. 32 and 36, the first fixing portion 260, the second fixing portion 261, the third fixing portion 262, and the fourth fixing portion 263, which are the locations where the leg belt 235 is fixed to the swingable arm portion 234, are arranged side-by-side along the width direction of the leg belt 235. Also, as shown in Figs. 32 and 36 to 38, the first fixing portion 260, the second fixing portion 261, the third fixing portion 262, and the fourth fixing portion 263, which are the locations where the leg belt 235 is fixed to the swingable arm portion 234, are arranged side-by-side in a straight line that is orthogonal to the lengthwise direction. In this way, the leg belt 235 is fixed to the swingable arm portion 234 at multiple (e.g., four) locations. Accordingly, when the swingable arm portion 234 is driven, the leg belt 235 is not likely to become twisted, and assistive power is suitably transmitted by the leg belt 235 from the swingable arm portion 234 to the thigh portion of the worker WB.

### Coupling portion

As shown in Figs. 32 to 34, the leg belts 235 are worn by being wrapped completely around the thigh portions of the worker WB. As shown in Figs. 32 to 34 and 36, the leg belts 235 each include a coupling portion 266 that can couple and uncouple one end portion 264 in the lengthwise direction of the leg belt 235 and another end portion 265 in the lengthwise direction of the leg belt 235. The coupling portion 266 is constituted by a hook-and-loop fastening mechanism. As shown in Fig. 36, the coupling portion 266 includes a first adhesive portion 267 that is a hook-and-loop fastener provided in the one end portion 264, and a second adhesive portion 268 that is provided in the other end portion 265 and can be coupled to and uncoupled from the first adhesive portion 267. An operation portion 265A that can be operated by a hand is provided in the other end portion 265.

As shown in Fig. 36, the one end portion 264 in the lengthwise direction of the leg belt 235 and the other end portion 265 in the lengthwise direction of the leg belt 235 are free end portions that are located at positions different from the fixing portions that are fixed to the swingable arm portions 234 (the first fixing portion 260, the second fixing portion 261, the third fixing portion 262, and the fourth fixing portion 263).

As shown in Figs. 32 to 34, the leg belt 235 is configured such that, when the leg belt 235 is being worn, it has a conical shape in which the cross-sectional area surrounded by the leg belt 235 decreases in size from the thigh portion base of the worker WB toward the toes. More specifically, as shown in Fig. 36, the leg belt 235 is approximately fan-shaped when laid flat.

### Putting on assistance suit

First, the right-left width of the space between the leg action portions 214 is adjusted to suit the waist portion of the worker WB by using the first adjustment mechanism 240 shown in Figs. 38 etc. to adjust the positions of the right and left waist frames 236 relative to the lower support plate 217 of the main frame 210. At this time, the elongated hole portions 241 are employed in the first adjustment mechanism 240, and therefore the right-left width of the space between the leg action portions 214 can be easily adjusted by merely loosening the fastening tools 242, sliding the waist frames 236 in the right-left direction without removing them from the main frame 210, and then again tightening the fastening tools 242 at appropriate locations in the elongated hole portions 241.

Next, as shown in Figs. 32 to 34 etc., the right and left arm portions (the right and left shoulder portions) of the worker WB are inserted through the right and left shoulder belts 211, and the waist belts 213 are wrapped around and fixed to the waist portion of the worker WB, thus attaching the main frame 210 to the back portion of the worker WB.

Next, the right and left leg belts 235 shown in Figs. 32 to 34 and 36 are attached to the corresponding thigh portions. The leg belts 235 are configured so as to be wrapped around the thigh portions of the worker WB so as to pass the front, inner, and rear sides of the thigh portions of the worker WB in this order, and then the coupling portions 266 are coupled. Here, as shown in Figs. 32 and 33, the coupling portions 266 are located at positions in the vicinity of the rear side of the thigh portions of the worker WB (the laterally outer side of the thigh portions) when the leg belts 235 are being worn. For this reason, the tightness of the leg belts 235 etc. can be easily adjusted. The worker WB puts on the assistance suit as described above.

### Operation of assistance suit

Generally, when moving a load placed on the floor to a loading surface that is higher than the floor (e.g., a loading surface such as a high shelf or a truck bed), the worker WB squats, grabs the load placed on the floor, lifts the load up with their hands stretched downward, and then lifts the load with their hands up to the loading surface. The following describes the case where this operation is performed by the worker WB when wearing the assistance suit.

If the worker WB wearing the assistance suit is not operating either of the raising operation switch 230 and the lowering operation switch 231 shown in Figs. 32 to 35, the actuation device 224 is stopped, and the drive motors 245 of the right and left leg action portions 214 are in the stopped state (the free rotation state). Accordingly, if the worker WB walks or bends their knees to lower their waist portion (squats), the swingable arm portions 234 swing to follow the thigh portions of the worker WB, and the movement of the worker WB is not hindered.

Next, in the case where the worker WB squats and grabs the load on the floor, if the worker WB then presses the lowering operation switch 231 of the left hand portion 227, the right and left main wires 225 and the right and left backup wires 226 are unwound from the actuation device 224, and the right and left hand portions 227 descend. When the pressing of the lowering operation switch 231 stops, the actuation device 224 stops, and the right and left hand portions 227 stop descending.

The actuation device 224 is provided with a braking function. While the actuation device 224 is stopped, the right and left main wires 225 and the right and left backup wires 226 are not unwound from the actuation device 224. In other words, when the actuation device 224 is stopped, the right and left hand portions 227 do not descend even if the weight of the load is applied to the right and left hand portions 227.

Next, the worker WB holds the left hand portion 227 in their left hand, and holds the right hand portion 227 in their right hand. The right and left hand portions 227 are placed on the load, and the worker WB lifts the load from the floor by standing up. In this state, if the worker WB presses the raising operation switch 230, the right and left leg action portions 214 are moved downward, and the right and left leg action portions 214 apply assistive power for pressing downward the right and left thigh portions of the worker WB, thus assisting the standing up of the worker WB. When the worker WB stands up, the right and left hand portions 227 do not descend due to the braking function of the actuation device 224, and the load does not fall.

After the worker WB has stood up while pressing the raising operation switch 230, when it is detected that the right and left leg action portions 214 have reached a position of facing substantially straight down, it is determined that the worker WB has fully stood up, and the drive motors 245 of the right and left leg action portions 214 are put in the stopped state (the free rotation state).

Next, the actuation device 224 operates, the right and left main wires 225 and the right and left backup wires 226 are wound by the actuation device 224, and the right and left hand portions 227 rise, thus lifting the load. When the load has been lifted to a desired height, the worker WB stops pressing the raising operation switch 230, and therefore the actuation device 224 stops, and the rising of the right and left hand portions 227 stops.

Note that before the right and left main wires 225 and the right and left backup wires 226 are wound more than necessary, the locking pieces 229 (see Figs. 32 to 34) abut against the guide pulleys 220, thus restricting the right and left main wires 225 and the right and left backup wires 226 from being wound any further.

Next, the worker WB walks to the high shelf, the truck bed, or the like provided with the loading surface on which the load is to be placed. Then, upon reaching the vicinity of the loading surface, the worker WB presses the lowering operation switch 231, the right and left main wires 225 and the right and left backup wires 226 are unwound, the right and left hand portions 227 are lowered, and the load is lowered. After the load is placed on the loading surface, the right and left hand portions 227 are detached from the load.

By repeating the above-described operations, the worker WB wearing the assistance suit can easily lift and move loads.

### Other aspects of third embodiment

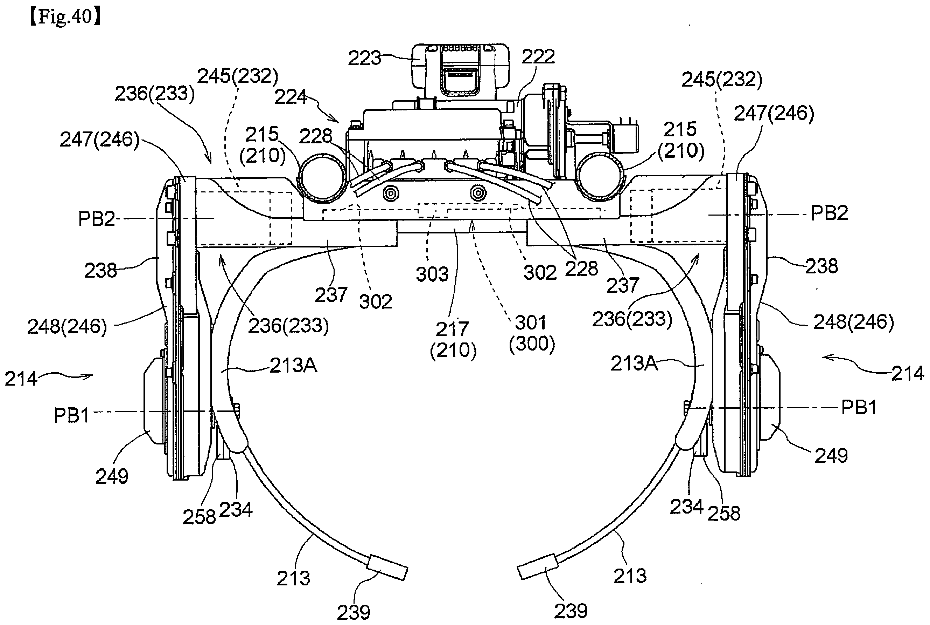

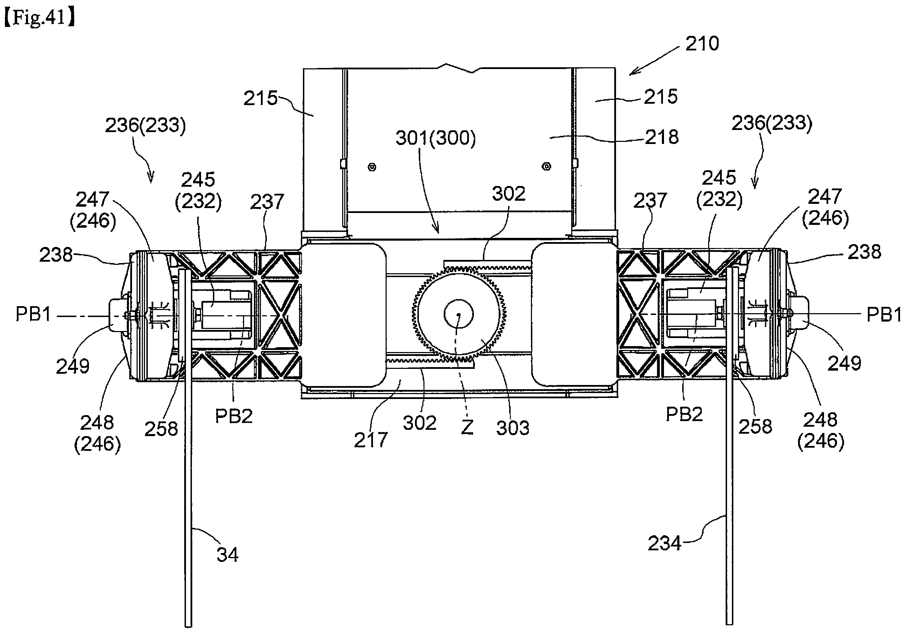

The following describes a first other aspect of the third embodiment. In this other aspect, the first adjustment mechanisms 240 of the third embodiment have been changed to a second adjustment mechanism 300 shown in Figs. 40 and 41.

As shown in Fig. 40, this assistance suit includes the attachment portion 233, the swingable arm portions 234, the driving device 232, and the second adjustment mechanism 300.

The attachment portion 233 is attached to the waist portion of the worker WB. The attachment portion 233 includes the lower support plate 217 of the main frame 210 and the waist frames 236. The main frame 210 is located on the back portion side of the worker WB. The waist frames 236 are respectively attached to the right and left sides of the main frame 210.

The swingable arm portions 234 are respectively attached to the right and left waist frames 236 so as to be capable of swinging about the swing axis PB1 that extends along the right-left direction. The right and left swingable arm portions 234 are configured to be capable of transmitting assistive power to the thigh portions of the worker WB.

The driving device 232 is configured to be capable of driving the right and left swingable arm portions 234 to swing independently.

The second adjustment mechanism 300 is configured to be capable of adjusting the right-left width of the space between the right and left leg action portions 214 so as to fit the waist portion of the worker WB. The right and left waist belts 213 and a guide mechanism 301 are provided as the second adjustment mechanism 300.

### Waist belt

As shown in Fig. 40, the waist belts 213 are attached to the right and left waist frames 236 respectively. Specifically, the right and left waist belts 213 are each attached to the inner end portion side of the driving portion 238 of the corresponding waist frame 236. The waist belts 213 can be worn by wrapped around the waist portion of the worker WB with an adjustable length due to the second length adjusting mechanism 239 that is constituted by, for example, a buckle mechanism provided with a locking portion and a locked portion.

### Guide mechanism

The guide mechanism 301 shown in Figs. 40 and 41 is configured to guide the sliding of the right and left waist frames 236 relative to the lower support plate 217 of the main frame 210. The guide mechanism 301 includes a right rack gear 302, a left rack gear 302, and a pinion gear 303. In other words, the guide mechanism 301 is constituted by a rack-and-pinion mechanism.

As shown in Fig. 41, the right rack gear 302 is provided on the right waist frame 236 so as to extend along the right-left direction. The left rack gear 302 is provided on the left waist frame 236 so as to extend along the right-left direction. The left rack gear 302 is arranged facing the right rack gear 302. The pinion gear 303 is located between the left rack gear 302 and the right rack gear 302. The pinion gear 303 is meshed with the left rack gear 302 and the right rack gear 302. The pinion gear 303 is supported at a central position, with respect to the right-left direction, on the lower support plate 217 of the main frame 210 so as to be capable of rotating about a front-rear axis Z that extends along the front-rear direction. The right and left waist frames 236 are not fixed to the lower support plate 217 of the main frame 210.

In the guide mechanism 301 shown in Fig. 41, when one of the right and left waist frames 236 slides in the right-left direction relative to the lower support plate 217 of the main frame 210, that sliding movement is transmitted to the other one of the right and left waist frames 236 via the pinion gear 303, and the other waist frame 236 slides in the direction opposite to the one waist frame 236 in the right-left direction relative to the lower support plate 217 of the main frame 210.

According to this second adjustment mechanism 300, when the waist belts 213 are attached to the waist portion of the worker WB, the right and left waist frames 236 are pulled by the waist belts 213 and move right-left symmetrically relative to the lower support plate 217 of the main frame 210 due to the guide mechanism 301, thus being automatically adjusted to a horizontal width that fits the waist portion of the worker WB. Accordingly, the right-left width of the space between the leg action portions 214 is automatically adjusted so as to fit the physique of the worker WB, and therefore the adjustment operation can be performed easily.

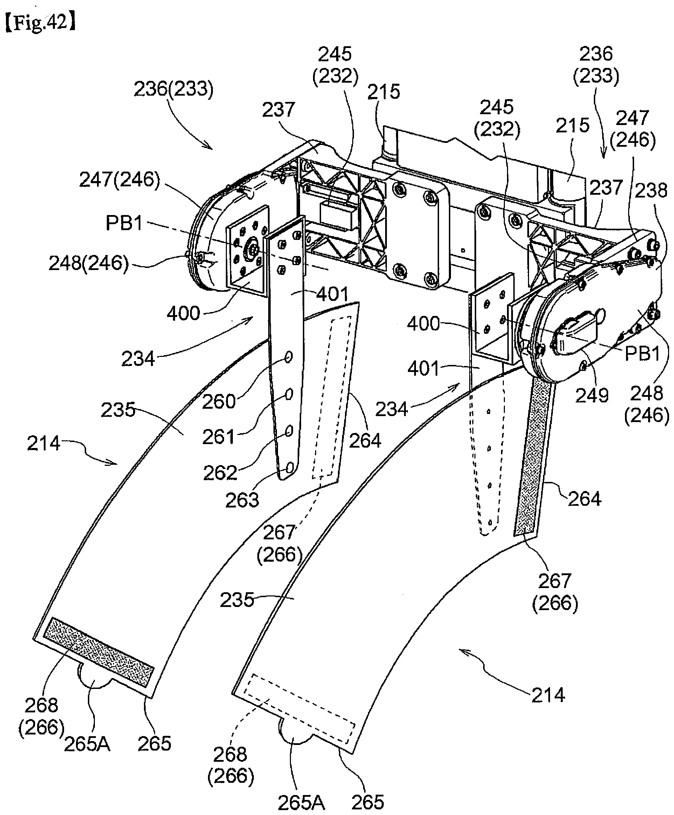

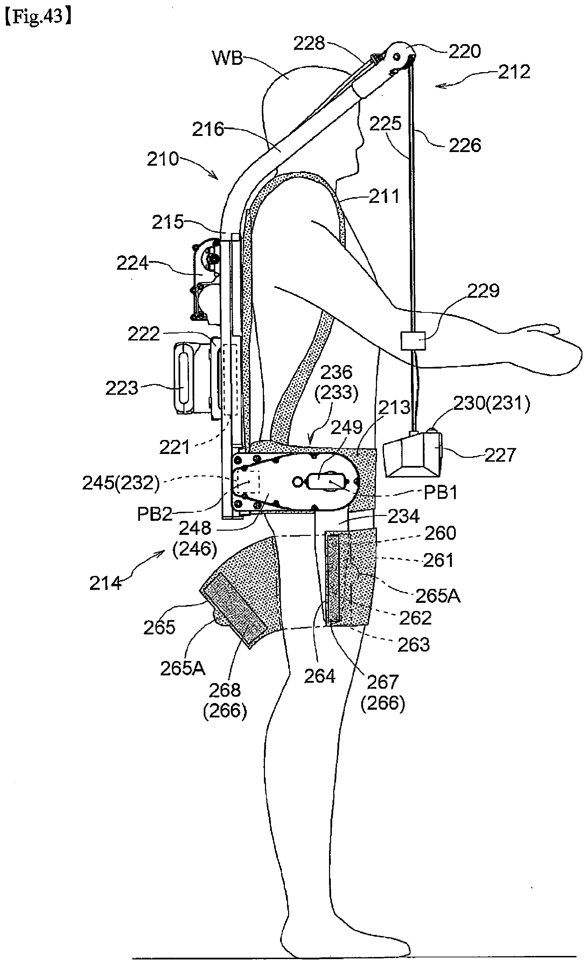

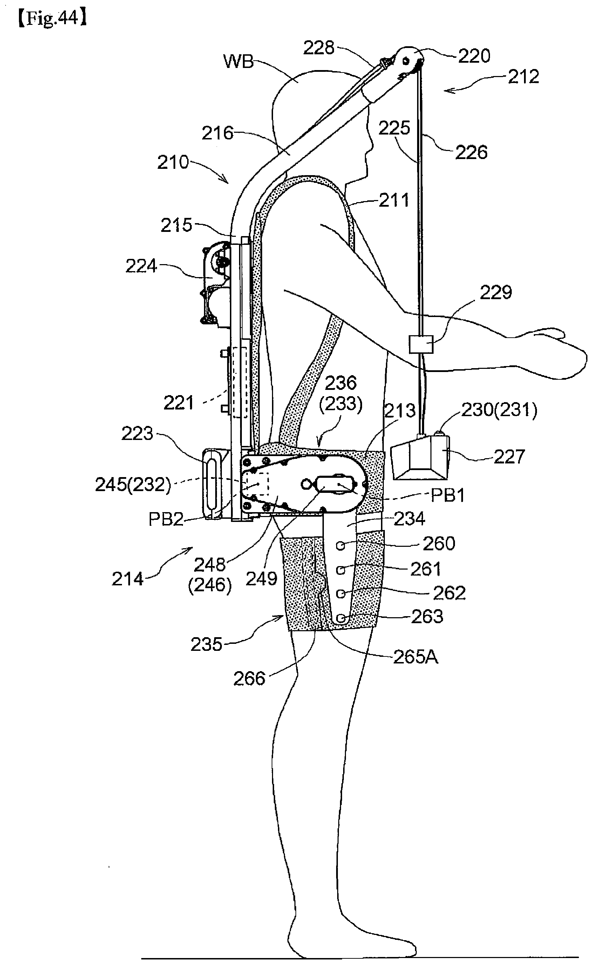

The following describes other aspects of the third embodiment described above. These other aspects can be appropriately combined as long as no contradiction arises.
(3-1) Although the above embodiment illustrates the case where the swingable arm portions 234 are constituted by a plate member that is made of a rigid member, there is no limitation to this. For example, as shown in Fig. 42, the swingable arm portions 234 may each include an attachment frame 400 that has rigidity and is shaped as a sharp-cornered U in a front view, and an elastic plate 401 that is shaped as a thin plate that has elasticity and is attached to the laterally inner face in the right-left direction of the attachment frame 400. The attachment frame 400 and the elastic plate 401 are configured to integrally swing about the swing axis PB1. The elastic plate 401, which is shaped as a thin plate that has elasticity, functions as a plate spring, and when the worker WB spreads their thigh portions outward, the elastic plate 401 deforms along the thigh portion of the worker WB, and presses the thigh portion of the worker WB inward (toward the side for closing the right and left thigh portions). Note that in this case, the elastic plates 401 may be attached to the laterally inner sides of the leg belts 235 (the same side as the thigh portion of the worker WB).
(3-2) Although the above embodiment illustrates the case where the one end portions 264 of the leg belts 235 are free end portions, there is no limitation to this. For example, as shown in Fig. 43, the one end portions 264 of the leg belts 235 may be fixed end portions that are portions fixed to the swingable arm portions 234. Also, the first adhesive portions 267 of the coupling portions 266 may be formed on the one end portions 264.
(3-3) Although the above embodiment illustrates the case where the leg belts 235 are attached to the laterally inner sides of the swingable arm portions 234, there is no limitation to this, and as shown in Figs. 42 and 43, the leg belts 235 may be attached to the laterally outer sides of the swingable arm portions 234.
(3-4) Although the above embodiment illustrates the case where the leg belts 235 are fixed to the swingable arm portions 234 at four locations, namely the first fixing portion 260, the second fixing portion 261, the third fixing portion 262, and the fourth fixing portion 263, there is no limitation to this. The leg belts 235 may be fixed to the swingable arm portions 234 at fixing portions other than the first fixing portion 260, the second fixing portion 261, the third fixing portion 262, and the fourth fixing portion 263. Also, the leg belts 235 may be fixed to the swingable arm portions 234 at two locations, namely the first fixing portion 260 and the second fixing portion 261 that are located on the two end portion sides in the width direction of the leg belts 235. Also, a configuration is possible in which the third fixing portion 262 and the fourth fixing portion 263 are omitted, and an intermediate fixing portion for fixing to the swingable arm portion 234 is provided at an intermediate position between the first fixing portion 260 and the second fixing portion 261.
(3-5) Although the above embodiment illustrates the case where the battery 223 is overlapped with the control device 221 in a rear view, there is no limitation to this. For example, as shown in Fig. 44, the battery 223 may be located below the control device 221 instead of being overlapped with the control device 221 in a rear view. In this case, the rear end portion of the drive motor 245 is located forward of the battery 223.
(3-6) Although the above embodiment illustrates the case where the coupling portions 266 are constituted by a hook-and-loop fastening mechanism, there is no limitation to this. For example, the coupling portions 266 may be constituted by a buckle mechanism, a zipper mechanism, or the like.
(3-7) Although the above embodiment illustrates the case where the leg belts 235 are made of polypropylene, there is no limitation to this. For example, the leg belts 235 may be members made of another resin that has flexibility and elasticity, such as vinyl chloride or silicone.
(3-8) Although the above embodiment illustrates the case where the leg belts 235 are fixed to the swingable arm portions 234 by fastening members such as screws, there is no limitation to this. For example, the leg belts 235 may be fixed to the swingable arm portions 234 by welding.
(3-9) Although the above embodiment illustrates an assistance suit that includes both the load lifting portions 212 and the leg action portions 214, there is no limitation to this. For example, the load lifting portions 212 may be omitted, and the assistance suit may include only the leg action portions 214.
(3-10) Although the above embodiment illustrates the case where the pinion gear 303 of the guide mechanism 301 can rotate about the front-rear axis Z that extends along the front-rear direction, there is no limitation to this. It is sufficient that the right and left waist frames 236 slide along the right-left direction relative to the lower support plate 217 of the main frame 210, and therefore the rotation axis of the pinion gear 303 need only face a direction that is orthogonal to the right-left direction (e.g., the up-down direction).

### DESCRIPTION OF REFERENCE SIGNS

### First Embodiment

1: main body portion
2: arm portion
17: driving device
18: wire
20: hand portion
23: raising operation switch (manual operation portion)
24: lowering operation switch (manual operation portion)
25: rotating body
26: rotating body
27: rotating body
28: rotating body
29: electrical motor
29a: output shaft
30: transmission mechanism
36: support member (fixing portion; cover)
36a: flange portion (first bearing portion)
36b: leg portion (second bearing portion)
36c: opening portion
40: coupling member
45: cover member (detachable portion; cover)
PA2: rotation axis

### Second Embodiment

101: main body portion
103: lifting arm
104: grip operation tool
105: winding winch
106: operation wire (cord element)
107: belt attachment tool
133: wire stopper portion
133a: elongated hole
145: stopper
150: reel device
160: outer wire
160a: threaded portion (fixing tool)
161: inner wire
162: coupling nut (fixing tool; screwing member)
163: fastening nut (fixing tool)

### Third Embodiment

210: main frame
213: waist belt
223: battery
232: driving device
233: attachment portion
234: swingable arm portion
235: leg belt
236: waist frame
244: gear mechanism
245: drive motor
246: gear case
256: fan-shaped gear
259: stopper body
264: one end portion
265: other end portion
266: coupling portion
301: guide mechanism
302: rack gear
303: pinion gear
PB1: swing axis
PB2: drive axis

## Claims

1. An assistance suit comprising:
a main body portion (1) configured to be attached to a back portion of a worker (WB), and an arm portion (2) that extends forward from the main body portion to a position beyond the worker;
a wire (18) that extends downward from the arm portion, and a hand portion (20) that is coupled to the wire and is configured to hold a load by being held by a hand of the worker;
a driving device (17) configured to raise the hand portion by winding the wire and lower the hand portion by unwinding the wire; and
a manual operation portion (23,24) that, by being operated by the worker, causes the driving device to operate,
wherein the driving device (17) is provided in the main body portion (1),
the driving device (17) comprises a rotating body (25,26,27,28) that is arranged extending in a right-left direction so as to be capable of rotating about a rotation axis (PA2) that extends in the right-left direction and is configured to wind and unwind the wire, an electrical motor (29) that is arranged extending in the right-left direction below the rotating body, and a transmission mechanism (30) that is arranged extending in an up-down direction and spans between an end portion of the electrical motor on an output shaft side and a right or left end portion of the rotating body that is on the output shaft side, and
motive power from the electrical motor is transmitted to the rotating body via the transmission mechanism, and the rotating body is thus driven to rotate in a winding direction and an unwinding direction.

2. The assistance suit according to claim 1, wherein the transmission mechanism (30) includes a first bearing portion (36a) that supports the right or left end portion of the rotating body on the output shaft side, the transmission mechanism being coupled to the main body portion,
a second bearing portion (36b) is provided, the second bearing portion supporting a right or left end portion of the rotating body on a side opposite to the output shaft side, the second bearing portion being coupled to the main body portion, and
wherein the rotating body is supported by the first bearing portion and the second bearing portion so as to be capable of rotating about the rotation axis.

3. The assistance suit according to claim 2, wherein due to the electrical motor being coupled to the transmission mechanism, the electrical motor (29) is coupled to the main body portion (1) via the transmission mechanism (30).

4. The assistance suit according to any one of claims 1 to 3, further comprising a cover (45) that covers the rotating body.

5. The assistance suit according to claim 4, wherein the cover (45) includes a fixing portion (36) and a detachable portion that is attachable and detachable, and
wherein an opening portion (36c) is provided in the fixing portion, and the wire is wound to and unwound from the rotating body through the opening portion.

6. The assistance suit according to claim 5, wherein the rotating body and the transmission mechanism are coupled via a coupling member (40) that enables coupling and uncoupling, and
wherein when the detachable portion is removed, the rotating body can be removed from the transmission mechanism.

## Patentansprüche

1. Hilfsgarnitur, umfassend:
einen Hauptkörperabschnitt (1), der dazu ausgestaltet ist, an einem Rückenabschnitt eines Arbeiters (WB) angebracht zu werden, und einen Armabschnitt (2), der sich von dem Hauptkörperabschnitt zu einer Position über den Arbeiter hinaus nach vorne erstreckt,
einen Draht (18), der sich von dem Armabschnitt nach unten erstreckt, und einen Handabschnitt (20), der an den Draht gekoppelt ist und dazu ausgestaltet ist, eine Last zu halten, indem er durch eine Hand des Arbeiters gehalten wird,
eine Antriebsvorrichtung (17), die dazu ausgestaltet ist, den Handabschnitt anzuheben, indem der Draht aufgewickelt wird, und den Handabschnitt abzusenken, indem der Draht abgewickelt wird, und
einen Handbedienungsabschnitt (23, 24), der, indem er durch den Arbeiter bedient wird, bewirkt, dass die Antriebsvorrichtung arbeitet,
wobei die Antriebsvorrichtung (17) in dem Hauptkörperabschnitt (1) vorgesehen ist,
die Antriebsvorrichtung (17) einen Drehkörper (25, 26, 27, 28), der sich in einer Rechts-Links-Richtung erstreckend angeordnet ist, um in der Lage zu sein, sich um eine Drehachse (PA2) zu drehen, die sich in der Rechts-Links-Richtung erstreckt und dazu ausgestaltet ist, den Draht aufzuwickeln und abzuwickeln, einen Elektromotor (29), der sich in der Rechts-Links-Richtung unter dem Drehkörper erstreckend angeordnet ist, und einen Übertragungsmechanismus (30), der sich in einer Aufwärts-Abwärts-Richtung erstreckend angeordnet ist und zwischen einem Endabschnitt des Elektromotors auf einer Ausgangswellenseite und einem rechten oder linken Endabschnitt des Drehkörpers, der sich auf der Ausgangswellenseite befindet, gespannt ist, umfasst und
Antriebsleistung von dem Elektromotor über den Übertragungsmechanismus auf den Drehkörper übertragen wird und der Drehkörper somit angetrieben wird, um sich in einer Aufwicklungsrichtung und einer Abwicklungsrichtung zu drehen.

2. Hilfsgarnitur nach Anspruch 1, wobei der Übertragungsmechanismus (30) einen ersten Lagerabschnitt (36a) beinhaltet, der den rechten oder linken Endabschnitt des Drehkörpers auf der Ausgangswellenseite stützt, wobei der Übertragungsmechanismus an den Hauptkörperabschnitt gekoppelt ist,
ein zweiter Lagerabschnitt (36b) vorgesehen ist, wobei der zweite Lagerabschnitt einen rechten oder linken Endabschnitt des Drehkörpers auf einer Seite gegenüber der Ausgangswellenweite stützt, wobei der zweite Lagerabschnitt an den Hauptkörperabschnitt gekoppelt ist, und
wobei der Drehkörper durch den ersten Lagerabschnitt und den zweiten Lagerabschnitt gestützt wird, um in der Lage zu sein, sich um die Drehachse zu drehen.

3. Hilfsgarnitur nach Anspruch 2, wobei aufgrund dessen, dass der Elektromotor an den Übertragungsmechanismus gekoppelt ist, der Elektromotor (29) über den Übertragungsmechanismus (30) an den Hauptkörperabschnitt (1) gekoppelt ist.

4. Hilfsgarnitur nach einem der Ansprüche 1 bis 3, ferner umfassend eine Abdeckung (45), die den Drehkörper abdeckt.

5. Hilfsgarnitur nach Anspruch 4, wobei die Abdeckung (45) einen Befestigungsabschnitt (36) und einen abnehmbaren Abschnitt beinhaltet, der anbringbar und abnehmbar ist, und
wobei ein Öffnungsabschnitt (36c) in dem Befestigungsabschnitt vorgesehen ist und der Draht durch den Öffnungsabschnitt auf den Drehkörper aufgewickelt und davon abgewickelt wird.

6. Hilfsgarnitur nach Anspruch 5, wobei der Drehkörper und der Übertragungsmechanismus über ein Kopplungselement (40) gekoppelt sind, das Koppeln und Entkoppeln ermöglicht, und
wobei, wenn der abnehmbare Abschnitt entfernt ist, der Drehkörper von dem Übertragungsmechanismus entfernt werden kann.

## Revendications

1. Combinaison d'assistance comprenant :
une partie de corps principal (1) configurée pour être fixée à une partie de dos d'un travailleur (WB) et une partie de bras (2) qui s'étend vers l'avant depuis la partie de corps principal jusqu'à une position au-delà du travailleur ;
un fil (18) qui s'étend vers le bas à partir de la partie de bras, et une partie de main (20) qui est couplée au fil et est configurée pour maintenir une charge en étant maintenue par une main du travailleur ;
un dispositif d'entraînement (17) configuré pour faire monter le partie de main en enroulant le fil et faire descendre la partie de main en déroulant le fil ; et
une partie d'actionnement manuel (23, 24) qui, en étant actionnée par le travailleur, provoque l'actionnement du dispositif d'entraînement,
dans laquelle le dispositif d'entraînement (17) est prévu dans la partie de corps principal (1),
le dispositif d'entraînement (17) comprend un corps rotatif (25, 26, 27, 28) qui est agencé en s'étendant dans une direction droite-gauche afin de pouvoir tourner autour d'un axe de rotation (PA2) qui s'étend dans la direction droite-gauche et est configuré pour enrouler et dérouler le fil, un moteur électrique (29) qui est agencé en s'étendant dans la direction droite-gauche au-dessous du corps rotatif, et un mécanisme de transmission (30) qui est agencé en s'étendant dans une direction de haut en bas et s'étend entre une partie d'extrémité du moteur électrique du côté d'un arbre de sortie et une partie d'extrémité droite ou gauche du corps rotatif qui est du côté de l'arbre de sortie, et
une puissance motrice du moteur électrique est transmise au corps rotatif via le mécanisme de transmission, et le corps rotatif est ainsi entraîné pour tourner dans une direction d'enroulement et une direction de déroulement.

2. Combinaison d'assistance selon la revendication 1, dans laquelle le mécanisme de transmission (30) comprend une première partie de palier (36a) qui supporte la partie d'extrémité droite ou gauche du corps rotatif du côté de l'arbre de sortie, le mécanisme de transmission étant couplé à la partie de corps principal,
une seconde partie de palier (36b) est prévue, la seconde partie de palier supportant une partie d'extrémité droite ou gauche du corps rotatif sur un côté opposé au côté de l'arbre de sortie, la seconde partie de palier étant couplée à la partie de corps principal, et
dans laquelle le corps rotatif est supporté par la première partie de palier et la seconde partie de palier afin de pouvoir tourner autour de l'axe de rotation.

3. Combinaison d'assistance selon la revendication 2, dans laquelle en raison du moteur électrique qui est couplé au mécanisme de transmission, le moteur électrique (29) est couplé à la partie de corps principal (1) via le mécanisme de transmission (30).

4. Combinaison d'assistance selon l'une quelconque des revendications 1 à 3, comprenant en outre un couvercle (45) qui recouvre le corps rotatif.

5. Combinaison d'assistance selon la revendication 4, dans laquelle le couvercle (45) comprend une partie de fixation (36) et une partie détachable qui peut être fixée et détachée, et
dans laquelle une partie d'ouverture (36c) est prévue dans la partie de fixation, et le fil est enroulé et déroulé du corps rotatif par le biais de la partie d'ouverture.

6. Combinaison d'assistance selon la revendication 5, dans laquelle le corps rotatif et le mécanisme de transmission sont couplés via un élément de couplage (40) qui permet le couplage et le découplage, et
dans laquelle lorsque la partie détachable est retirée, le corps rotatif peut être retiré du mécanisme de transmission.
